# EUROPEAN PATENT SPECIFICATION

(11) **EP 1 393 788 B1**
(45) Date of publication and mention of the grant of the patent: **20.08.2008**
(21) Application number: 03255300.0
(22) Date of filing: 27.08.2003
(51) Int. Cl.: A63F 13/00, G06F 12/14, G06K 17/00, A63F 13/10

(54) **Game device and method for saving game data**
Videospielvorrichtung und Methode zum Speichern von Spieldaten
Appareil de jeu vidéo et procédé de sauvegarder de données de jeux

(30) Priority: 28.08.2002 JP 2002248695
(43) Date of publication of application: 03.03.2004
(60) Divisional application: 08153145.1
(73) Proprietor: Konami Digital Entertainment Co., Ltd., Tokyo 107-8324 (JP)
(72) Inventor: Uchiyama, Satoshi, Konami Corporation, Tokyo 100-6330 (JP); Hirota, Ryuhei, Konami Corporation, Tokyo 100-6330 (JP)
(74) Representative: Style, Kelda Camilla Karen

(56) References cited:
- EP-A- 0 669 580
- EP-A- 1 065 599
- PATENT ABSTRACTS OF JAPAN vol. 1995, no. 11, 26 December 1995 (1995-12-26) -& JP 07 200756 A (TOPPAN PRINTING CO LTD), 4 August 1995 (1995-08-04)

## Description

The present invention relates to game machines and methods for saving game data, and in particular to game machines and methods for saving game data configured to save game data to a magnetic card or other recording medium.

In games in which the player character undergoes changes as the game unfolds, as in rearing and development simulation games, by storing game data based on the results of playing the game on a magnetic card, IC card, memory card or other recording medium, one can continue the game at a later opportunity using the game data stored on the recording medium.

Also in games in which the match results of action-type games and sports simulation games are left as the player's personal record, the player character changes based on the match results, or the difficulty of the game reflects the game results, the game data may be stored similarly on a recording medium.

In games in which the game data are stored on a recording medium, a game machine unit is provided with a data input/output means with which data can be read from or written to a removable recording medium.

As an example of a data input/output means, a card reader/writer is conceivable, with which data can be read from or written to a magnetic card made by applying a magnetic powder to the rear side of a plastic card, for example. In this case, if game data are .stored on the magnetic card inserted in the card reader/writer, then it is possible to read in the game data and continue the game with those game data. Moreover, the game data on the inserted magnetic card are overwritten when the player issues an instruction to save the game data, or when it has been judged by the game application that the time has come to save the game data.

If, while playing the game, the game results appear to be disadvantageous for the player, then it is conceivable that the player retrieves the recording medium, in order to not leave the game results on the recording medium. In this case, there is the risk that the game results are not accurately reflected and the fun of the game is severely reduced. In particular in games in which the game performance is published on a network or in which one battles a plurality of player opponents over a network, the actual game performance of each player is not reflected, and much of the game data will be game data that are kept by improper means.

Moreover, it is possible to duplicate recording media on which the same game data are stored by inserting the recording medium on which the game data has been stored into the game device, retrieving the recording medium and inserting a different recording medium before saving the game. For example, it is possible to obtain game data of a high level, without going through an extensive gaming process, by duplicating a recording medium storing game data or a character status with a preferable performance. Recording media on which the game data are duplicated in this manner receive high prices at internet auctions or the like, and an entire market for them has been created.

EP0669580 describes a data security apparatus ensuring a secure prevention of illegal execution, analysis, or copy of the data by a person having no legitimate title. Most specifically this apparatus is concerned with the illegal use of program data stored on ROM memory, as is used in numerous game devices.

EP1065599 describes a system to ensure that a user has to play the game through, and does not copy a partially completed game off a fellow user. When generated and renewed data is saved in memory, the system lays provision to testing whether or not data already stored in the memory is proper data; data which could conceivably have lead to the current data which is to be written, and restricts writing if this is not the case.

Embodiments of the present invention present a method for saving game data and a game device with which the results of a game that was actually played are accurately reflected in the game data stored on a recording medium, and with which duplication of the game data by improper means as well as utilization of game data that has been saved by improper means can be prevented.

In accordance with claim 1, a method for saving game data in a game device that executes a game with a game execution unit and stores game data based on a result of that game onto a removable recording medium that is placed in a data input/output unit includes executing, when starting the game, a step of reading data that have been stored in a predetermined region of a recording medium that has been placed in the data input/output unit, and determining whether those data are improper retrieval detection data or proper termination certification data, a step of prohibiting use of the recording medium if it is judged that the data that have been read are improper retrieval detection data, a step of overwriting the predetermined region of the recording medium with improver retrieval detection data and allowing use of the recording medium if it is judged that the data that have been read are proper termination certification data; executing, when saving the game data, a step of reading the data stored in the predetermined region of the recording medium placed in the data input/output unit and determining whether those data are improper retrieval detection data, a step of prohibiting storage of the game data on the recording medium if it is judged that the data that have been read are not improper retrieval detection data, a step of storing on the recording medium the game data based on a result from execution of the game with the game execution unit if it is judged that the data that have been read are improper retrieval detection data; and executing, when terminating the game, a step of overwriting the predetermined region on which the improper retrieval detection data have been stored on the recording medium with proper termination certification data.

With this configuration, proper termination certification data maybe recorded in a predetermined region of recording media on which the game data have been saved properly, and improper retrieval data maybe recorded on a predetermined region of recording media that are improperly retrieved during the game. Consequently, by verifying the data in the predetermined region of the recording medium when starting the game or when saving the game data, it maybe detected whether the recording medium has been improperly retrieved, unauthorized duplication of the game data maybe prevented, and the results of actual games maybe reflected in the game data stored on the recording medium.

The method for saving game data according to claim 2 of the present invention is the method for saving game data according to claim 1, wherein the predetermined region of the recording medium is set to a storage region of a retrieval prevention flag, a state in which the retrieval prevention flag in that predetermined region is set is taken to be a state in which the improper retrieval detection data are stored, and a state in which the retrieval prevention flag in that predetermined region is not set is taken to be a state in which the proper termination certification data are stored; and including executing, at the beginning of the game, a step of verifying whether a retrieval prevention flag has been recorded on the recording medium placed in the data input/output unit; a step of prohibiting use of the recording medium if the retrieval prevention flag has been recorded on the recording medium; a step of recording the retrieval prevention flag on the recording medium and allowing use of the recording medium if the retrieval prevention flag has not been recorded on the recording medium; executing, when saving the game data, a step of verifying whether the retrieval prevention flag has been recorded on the recording medium placed in the data input/output unit; a step of prohibiting storage of the game data on the recording medium if the retrieval prevention flag has not been recorded on the recording medium; a step of storing on the recording medium the game data based on a result from execution of the game with the game execution unit if the retrieval prevention flag has been recorded on the recording medium; and executing, when terminating the game, a step of clearing the retrieval prevention flag recorded on the recording medium.

With this configuration, the recording medium placed in the data input/output unit maybe put to a state in which the retrieval prevention flag is recorded during the execution of the game, and if the recording medium is retrieved during the execution of the game, then the retrieval prevention flag may stay recorded. If a recording medium on which the retrieval prevention flag is recorded is placed in the data input/output unit when starting the game, then use of that recording medium maybe prohibited, and the game may not be started with the game data stored on it. And if the retrieval prevention flag is not recorded on the recording medium placed in the data input/output unit when storing the game data, then storage of the game data maybe prohibited, so that storage of the game data maybe prohibited when the recording medium inserted when starting the game is retrieved during the game and another recording medium is inserted.

The method for saving game data according to claim 3 of the present invention is the method for saving game data according to claim 1 or 2, further comprising executing a step of setting an ID storage region for storing an ID on the recording medium, and storing in a memory unit the ID stored in the ID storage region of the recording medium when starting the game; and executing, when saving the game data, a step of reading the ID stored on the recording medium placed in the data input/output unit and verifying whether that ID matches the ID stored in the memory unit; a step of prohibiting storage of the game data to the recording medium if the ID stored on the recording medium does not match the ID stored in the memory unit; and a step of allowing storage of the game data on the recording medium if the ID stored on the recording medium matches the ID stored in the memory unit.

With this configuration, when the recording medium that was inserted when starting the game maybe retrieved and another recording medium on which the flag is recorded maybe inserted, then this can be detected through the ID, writing of the game data maybe prevented, and improper duplication of game data can be prevented.

The method for saving game data according to claim 4 of the present invention is the method for saving game data according to claim 3, further comprising, when starting the game, a step of assigning an ID to the recording medium placed in the data input/output unit and storing this ID on the recording medium.

With this configuration, even when no unique ID is recorded on each recording medium, an ID maybe issued to the recording medium when the recording medium is placed in the data input/output unit, and saving of game data by improper unit maybe prevented.

The method for saving game data according to claim 5 of the present invention is the method for saving game data according to claim 1, wherein the proper termination certification data are a predetermined identification code, and the improper retrieval detection data are a security code that is assigned to the recording medium when starting the game; the method comprising executing, when starting the game, a step of reading data stored in the predetermined region of the recording medium placed in the data input/output unit; a step of prohibiting use of the recording medium if the data that have been read in are not the predetermined identification code; a step of assigning the security code to the recording medium, overwriting the predetermined region of the recording medium with that security code and allowing use of the recording medium if the data that have been read are the predetermined identification code; executing, when saving the game data, a step of reading the data stored in the predetermined region of the recording medium placed in the data input/output unit; a step of prohibiting storage of the game data on the recording medium if the data that have been read from the recording medium are different from the security code that has been assigned when starting the game; a step of storing on the recording medium the game data based on a result from execution of the game with the game execution unit if the data that have been read from the recording medium match the security code that has been assigned when starting the game; and executing, when terminating the game, a step of overwriting the predetermined region on the recording medium with the predetermined identification code.

With this configuration, the recording medium placed in the data input/output unit when starting the game maybe used only if a predetermined identification code is stored on it. During execution of the game, an issued security code maybe stored by overwriting on the recording medium, and if the recording medium is retrieved during the execution of the game, then this recording medium may not be used again. The predetermined identification code maybe overwritten on recording media on which the game data are saved properly, so that these recording media can be used to play the game.

In accordance with claim 6 of the present invention, a game device comprises a game execution unit for executing a game; a data input/output unit with which data can be read/written from/onto a removable recording medium that is placed in the data input/output unit; a medium usage restriction unit that, when starting the game, verifies whether a retrieval prevention flag has been recorded on the recording medium placed in the data input/output unit, allows usage of the recording medium if the retrieval prevention flag has not been recorded, and prohibits usage of the recording medium if the retrieval prevention flag has been recorded; a flag setting unit that records a retrieval prevention flag onto a recording medium whose usage has been allowed by the medium usage restriction unit; a data saving restriction unit that, when saving game data, verifies whether the retrieval prevention flag has been recorded on the recording medium placed in the data input/output unit, prohibits storage of game data on the recording medium if the retrieval prevention flag has not been recorded on the recording medium, and allows storage, on the recording medium, of game data based on a result from execution of the game with the game execution unit if the retrieval prevention flag has been recorded on the recording medium; and a flag cancellation unit that, when terminating the game, clears the retrieval prevention flag recorded on the recording medium.

With this configuration, when the recording medium placed in the data input/output unit is retrieved while playing the game, then the retrieval prevention flag may stay recorded. If a recording medium with recorded retrieval prevention flag is placed in the data input/output unit when starting the game, then usage of that recording medium maybe prohibited, and the game may not be started with the game data stored thereon. Furthermore, if no retrieval prevention flag is recorded on the recording medium placed in the data input/output unit when saving the game data, then storage of the game data maybe prohibited, so that saving of the game data maybe prohibited even if the recording medium that was inserted when starting the game is retrieved during the game and another recording medium is inserted.

The game device according to claim 7 of the present invention is the game device according to claim 6, wherein an ID storage region for storing an ID is set in the recording medium; the game device further comprising a memory unit that can store the ID stored in the ID storage region of the recording medium; and an ID storage unit for storing the ID stored on the recording medium in the memory unit when starting the game; wherein the data saving restriction unit further comprises a function of, when saving the game data, reading the ID stored on the recording medium placed in the data input/output unit and verifying whether this ID matches the ID stored in the memory unit, prohibiting storage of the game data onto the recording medium if the ID stored on the recording medium does not match the ID stored in the memory unit, and allowing storage of the game data onto the recording medium if the ID stored on the recording medium matches the ID stored in the memory unit.

With this configuration, even if the recording medium that was inserted when starting the game is retrieved during the game and another recording medium is inserted, this maybe recognized from the ID, and improper duplication of game data maybe prevented.

The game device according to claim 8 of the present invention is the game device according to claim 7, further comprising ID assignment unit for assigning an ID to the recording medium placed in the data input/output unit when starting the game, and storing this ID on the recording medium.

With this configuration, even when no unique ID is recorded on each recording medium, an ID maybe issued to the recording medium when the recording medium is placed in the data input/output unit, and saving of game data by improper unit maybe prevented.

In accordance with claim 9 of the present invention, a game device comprises a game execution unit for executing a game; a data input/output unit with which data can be read/written from/onto a removable recording medium that is placed in the data input/output unit; a medium usage restriction unit that, when starting the game, reads data in a predetermined region of the recording medium placed in the data input/output unit, prohibits usage of the recording medium if the data that have been read are not a predetermined identification code, and, if the data that have been read from the recording medium are a predetermined identification code, assigns to the recording medium a security code different from the predetermined identification code, overwrites the predetermined region of the recording medium with that security code, and allows usage of the recording medium; a data saving restriction unit that, when saving game data, reads data in a predetermined region of the recording medium placed in the data input/output unit, prohibits storage of game data on the recording medium if the data read from the recording medium are different from the security code assigned when starting the game, and stores, on the recording medium, game data based on a result from execution of the game with the game execution unit if the data read from the recording medium match the security code assigned when starting the game; and a security code cancellation unit that, when terminating the game, overwrites the predetermined region of the recording medium with a predetermined identification code.

With this configuration, the recording medium placed in the data input/output unit when starting the game maybe used only if a predetermined identification code is stored on it. During execution of the game, an issued security code is stored by overwriting on the recording medium, and if the recording medium is retrieved during the execution of the game, then this recording medium may not be used again. The predetermined identification code maybe overwritten on recording media on which the game data are saved properly, so that these recording media maybe used to play the game.

In accordance with claim 10 of the present invention, a method for saving game data in a game device that executes a game with a game execution unit and stores game data based on a result of that game onto a removable recording medium that is placed in a data input/output unit comprises, when starting the game, a step of overwriting the game data stored on the recording medium with game data based on a result that is at least as low as the lowest result that is conceivable when executing the game with the game execution unit; and a step of executing the game with the game execution unit and overwriting the game data stored on the recording medium with game data based on a result of that game.

Here, if the player is about to receive a disadvantageous result and retrieves the recording device, then game data based on a result that is at least as low as the lowest conceivable result maybe stored on that recording medium, and the original game data may not be reproduced.

The method for saving game data according to claim 11 of the present invention is the method for saving game data according to claim 10, further comprising executing a step of setting an ID storage region for storing an ID on the recording medium, and, when starting the game, storing in a memory unit the ID stored in the ID storage region of the recording medium; and executing, when saving the game data, a step of reading the ID stored in the recording medium placed in the data input/output unit and verifying whether this ID matches the ID stored in the memory unit; a step of prohibiting storage of the game data to the recording medium if the ID stored on the recording medium does not match the ID stored in the memory unit; a step of allowing storage of the game data on the recording medium if the ID stored on the recording medium matches the ID stored in the memory unit.

Here, even if the recording medium that was placed in the data input/output unit when starting the game is retrieved and another recording medium is inserted, this improper access at the time of saving the data maybe recognized by verifying the ID stored on the recording medium, and improper duplication of game data maybe prevented.

The method for saving game data according to claim 12 of the present invention is the method for saving game data according to claim 11, further comprising, when starting the game, executing a step of assigning an ID to the recording medium placed in the data input/output unit and storing this ID on the recording medium.

With this configuration, even when no unique ID is recorded on each recording medium, an ID may be issued to the recording medium when the recording medium is placed in the data input/output unit, and saving of game data by improper unit may be prevented.

In accordance with claim 13 of the present invention, a game device comprises a game execution unit for executing a game; a data input/output unit with which data can be read/written from/onto a removable recording medium that is placed in the data input/output unit; a retrieval prevention data storage unit that, when starting the game, overwrites game data stored on the recording medium with game data based on a result that is at least as low as the lowest result that is conceivable when executing the game with the game execution unit; and a proper data storage unit for executing the game with the game execution unit and overwriting the game data stored on the recording medium with game data based on a result of that game.

Here, if the player is about to receive a disadvantageous result and retrieves the recording device, then game data based on a result that is at least as low as the lowest conceivable result maybe stored on that recording medium, and the original game data may not be reproduced.

The game device according to claim 14 of the present invention is the game device according to claim 13, wherein an ID storage region for storing an ID is set in the recording medium; and the game device further comprises a memory unit that can store an ID stored on the recording medium; an ID storage unit for storing the ID stored on the recording medium in the memory unit when starting the game; and a data saving restriction unit that, when saving the game data, reads the ID stored on the recording medium placed in the data input/output unit, verifies whether this ID matches the ID stored in the memory unit, prohibits storage of the game data onto the recording medium if the ID stored on the recording medium does not match the ID stored in the memory unit, and allows storage of the game data onto the recording medium if the ID stored on the recording medium matches the ID stored in the memory unit.

Here, even if the recording medium that was placed in the data input/output unit when starting the game is retrieved and another recording medium is inserted, this improper access maybe recognized at the time of saving the data by verifying the ID stored on the recording medium, and improper duplication of game data maybe prevented.

The game device according to claim 15 of the present invention is the game device according to claim 14, further comprising ID assignment unit for assigning an ID to the recording medium placed in the data input/output unit when starting the game, and storing this ID on the recording medium.

With this configuration, even when no unique ID is recorded on each recording medium, an ID may be issued to the recording medium when the recording medium is placed in the data input/output unit, and saving of game data by improper unit may be prevented.

Reference will now be made, by way of example, to the accompanying drawings, in which:
Fig. 1 is a control block diagram showing the overall configuration of a first embodiment;
Fig. 2 is a flowchart of a common operation;
Fig. 3 is a flowchart of the case that no data are recorded during the game;
Fig. 4 is a flowchart of the case that data are recorded during the game;
Fig. 5 is a flowchart of first embodiment;
Fig. 6 is a flowchart of second embodiment;
Fig. 7 is a flowchart of third embodiment;
Fig. 8 is a flowchart of fourth embodiment;
Fig. 9 is a flowchart of fifth embodiment;
Fig. 10 is a display of game screen;
Fig. 11 is a display of game screen;
Fig. 12 is a display of game screen;
Fig. 13 is a display of game screen;
Fig. 14 is a display of game screen;
Fig. 15 is a flowchart of soccer game;
Fig. 16 is a flowchart of soccer game.

Embodiments of the present invention will now be described with reference to the accompanying drawings.

### Overall Configuration

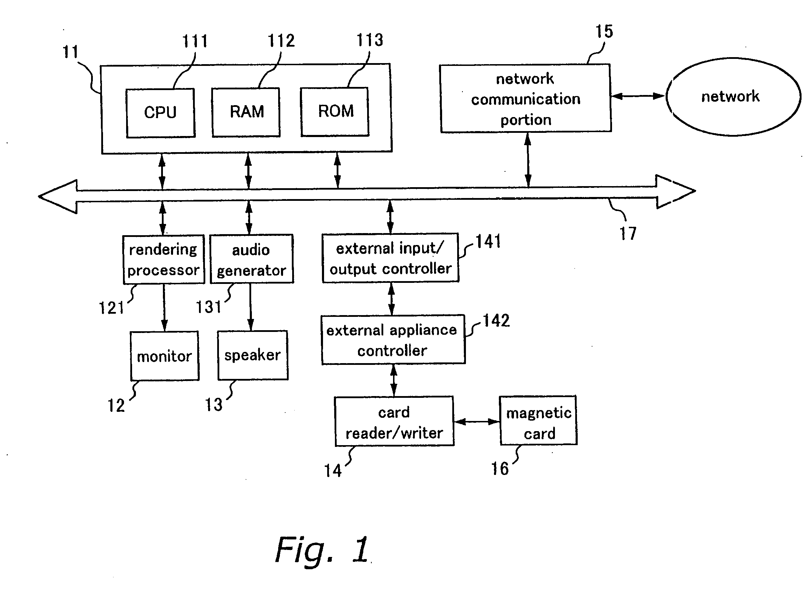

The game device according to an embodiment of the present invention may be a game machine for home use or an arcade game machine installed at a video-game arcade or the like, and the recording medium may be a magnetic card made of a thin sheet of plastic with a magnetic powder applied to its rear side, a memory card incorporating an EEPROM or a flash memory, or a magnetic disk, such as a flexible disk. In the following, it is assumed that the game machine is an arcade game, and the recording medium storing the game data is a magnetic card. Fig. 1 is a control block diagram showing the overall configuration thereof.

The game device includes a main board 11 on which are mounted a CPU 111, a RAM 112 and a ROM 113, a monitor 12 for displaying the game graphics, a rendering processor 121 for rending the game graphics on the monitor 12, a speaker for producing the game's sound effects or BGM, an audio generator 131 generating audio data to be enunciated by the speaker 13, a card reader/writer 14 in which a magnetic card 16 can be placed and with which data can be read/written from/to the magnetic card 16, an external appliance controller 142 for controlling the operation of the card reader/writer 14, an external input/output controller 141 for controlling the input/output with respect to the card reader/writer 14, and a network communication portion 15 connected to a network such as a LAN or the internet. The main board 11, the rendering processor 121, the audio generator 131, the external input/output controller 141 and the network communication portion 15 are connected to one another by a bus line 17.

### Basic Operation

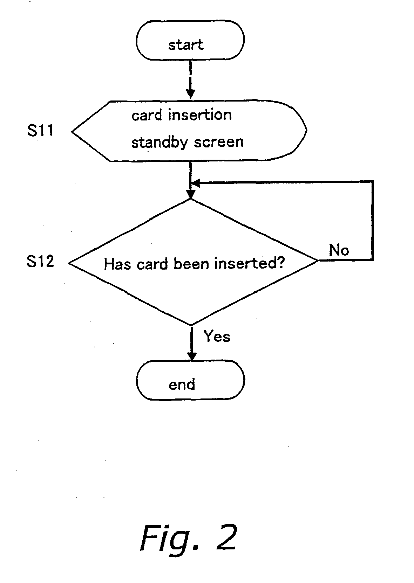

The basic operation of the game device is described with reference to Figs. 2 to 4.

### Card Insertion Acceptance Process

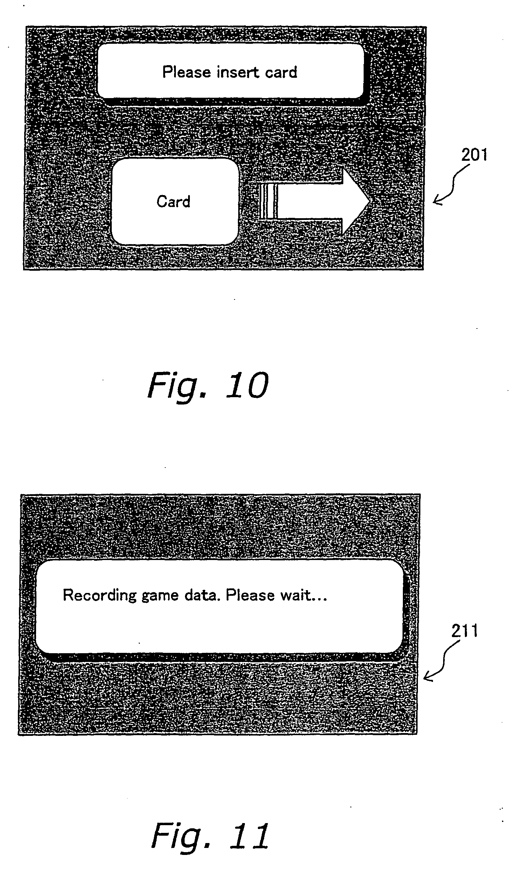

First, the card insertion acceptance process is described with reference to Fig. 2. When the power is turned on and the game is started, a card insertion standby screen is displayed on the monitor 12 at Step S 11. For example the card insertion standby screen 201 shown in Fig. 10 is displayed on the monitor 12. The card insertion standby screen 201 displays the message "please insert card," urging the player to insert a card.

At Step S12, it is determined whether a card has been inserted. If a magnetic card has been inserted into a predetermined insertion port, and the card has been placed in the card reader/writer 14, then it shifts to the next process from this routine.

### Case that Nothing is Recorded on the Magnetic Card During the Game

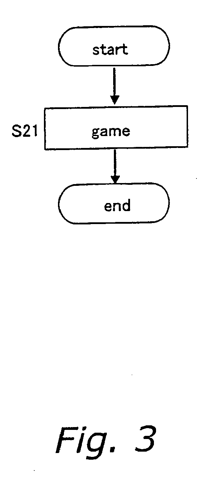

If nothing is recorded on the magnetic card during the game, then, the game is executed at Step S21, as shown in Fig. 3. The configuration may be such that when the game has finished, game data based on the game results are written onto the magnetic card, or it may be such that no game data are written onto the magnetic card.

### Case that Game data is Recorded on the Magnetic Card During the Game

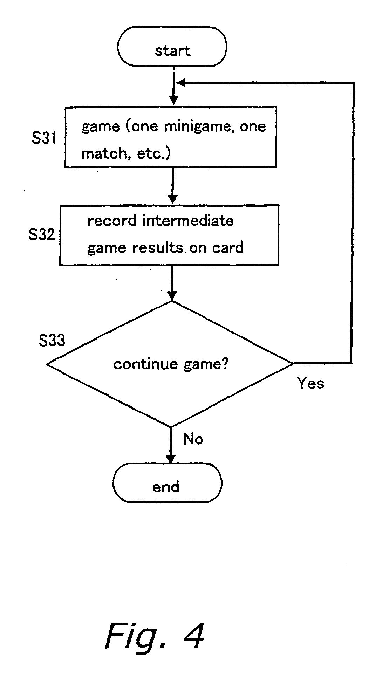

Fig. 4 is a flowchart of the case that game data is recorded on the magnetic card during the game.

At Step S31, one game cycle, within a plurality of stages or a plurality of matches, in which the game data can be saved is executed. For example, a game in which a plurality of mini-games are combined is configured such that it is possible to save the game data each time a mini-game ends, and one mini-game that is automatically selected by the application or one mini-game that is selected by the player is executed. In configurations in which a game continues through a predetermined number of matches or until a predetermined number of losses is reached, if game data can be saved for each match, then the first match is executed.

At Step S32, game data based on the results of the game executed at Step S31 are recorded on the magnetic card placed in the card reader/writer 14 as intermediate results.

At Step S33, it is determined whether the game should be continued. If the player gives an instruction to continue the game, then the procedure jumps to Step S31, and the game for the next stage or the next match is executed. Moreover, if the player has given an instruction not to continue the game or it is determined from the results of the game executed at Step S31 that the predetermined conditions for game over are met, then it is determined that the game is not continued, and the game is terminated.

### First Embodiment

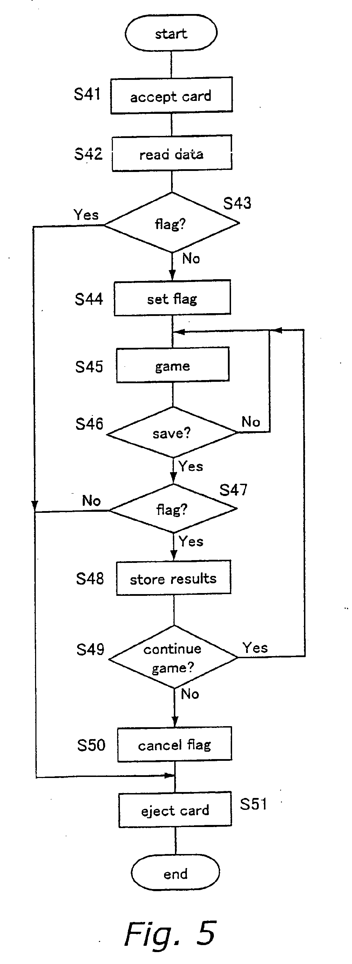

A game device according to a first embodiment of the present invention and its operation are described with reference to the flowchart in Fig. 5.

At Step S41, a card insertion acceptance process is carried out. Here, the card insertion acceptance process shown in Fig. 2 is carried out.

At Step S42, a process of reading data on the magnetic card 16 placed in the card reader/writer 14 is executed.

At Step S43, it is determined whether the data read from the magnetic card 16 include a retrieval prevention flag. Here, of the data read from the magnetic card 16, the data of a region in which the retrieval prevention flag is stored are verified, and it is determined whether a retrieval prevention flag has been recorded or not. If it is judged that a retrieval prevention flag has been recorded on the magnetic card 16 placed in the card reader/writer 14, then the procedure advances to Step S51, and a process of ejecting the inserted magnetic card 16 is executed. If it is determined at Step S43 that no retrieval prevention flag has been recorded on the magnetic card 16, then the procedure advances to Step S44.

At Step S44, a retrieval prevention flag is recorded on a predetermined region of the magnetic card 16 placed in the card reader/writer 14.

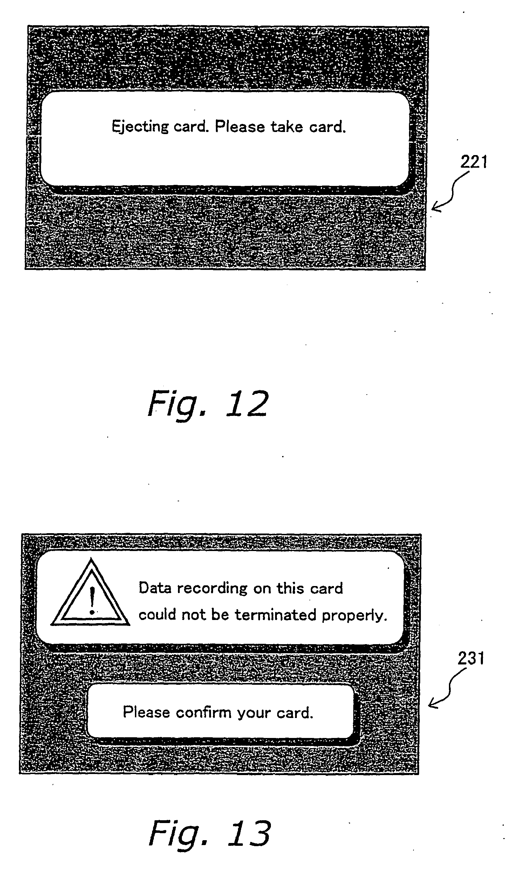

This retrieval prevention flag is recorded at a predetermined region of the inserted magnetic card 16 while the game is executed, and if the magnetic card 16 is improperly retrieved, then this retrieval prevention flag stays recorded. If a magnetic card 16 with such a recorded retrieval prevention flag is placed in the card reader/writer 14, then this is detected and the card is ejected. For example, an improper card ejection processing screen 231 as shown in Fig. 13 may be displayed, displaying such a message as "data recording on this card could not be terminated properly" or "please confirm your card" or the like, and at Step S51, the magnetic card 16 placed in the card reader/writer 14 is ejected.

At Step S45, a game selected by the player or a game automatically selected by the game device is executed.

At Step S46, it is determined whether the time has come to save the game data. As mentioned above, it is judged whether, within a game constituted by a plurality of stages or a plurality of matches, a game cycle at which the game data can be saved has been terminated, and if it is judged that it is time to save the game data, then the procedure advances to Step S47, and if not, then it advances to Step S45.

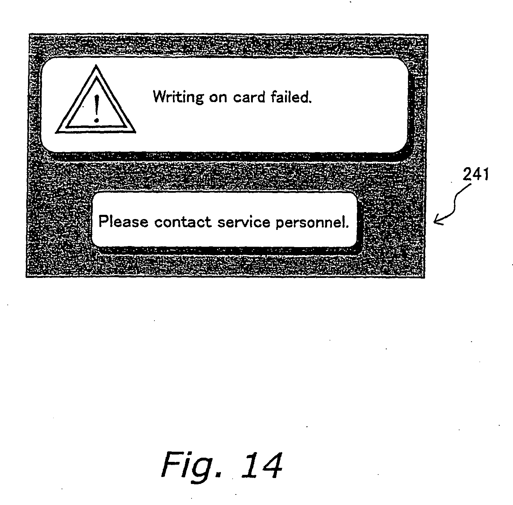

At Step S47, it is determined whether the retrieval prevention flag has been recorded at a predetermined region of the magnetic card 16 placed in the card reader/writer 14. If no retrieval prevention flag has been recorded at a predetermined region of the magnetic card 16, then the procedure advances to Step S51. In this case, as shown in Fig. 14, a write error screen 241 is displayed, displaying such a message as "writing on the card failed" or "please contact service personnel" or the like, and at Step S51 the magnetic card 16 inserted into the card reader/writer 14 is ejected.

If it is judged at Step S47 that the retrieval prevention flag has been recorded at the predetermined region of the magnetic card 16, then the procedure advances to Step S48.

At Step S48, the game data based on the results of the game executed at Step S45 are recorded on the magnetic card 16. Here, a game data recording screen 211 as shown in Fig. 11 is displayed, and the game data storage region on the magnetic card 16 is overwritten with new game data, while input by the player is prohibited.

At Step S49, it is determined whether to continue the game or not. If there is an instruction by the player to continue the game or if the procedure automatically advances to the next game, then the procedure advances to Step S45. And if the player has given an instruction to terminate the game, if a predetermined number of defeats have been reached, or if a game end condition has been reached, such as when the player has lost all his lives, then the procedure advances to Step S50.

At Step S50, the retrieval prevention flag recorded on the magnetic card 16 is cancelled. Here, the process of canceling the retrieval prevention flag is executed by resetting the data in the predetermined region of the magnetic card 16. After that, a card ejection processing screen 221 as shown in Fig. 12 is displayed, and the procedure advances to Step S51.

At Step S51, the magnetic card 16 is ejected from the card reader/writer 14.

With this first embodiment, a retrieval prevention flag is recorded on the magnetic card 16 placed in the card reader/writer 14 before the game is started, so that if the magnetic card is retrieved during the game, the retrieval prevention flag stays recorded. If a magnetic card 16 on which the retrieval prevention flag is still recorded is placed in the card reader/writer 14, use of the stored game data can be denied by ejecting this magnetic card 16. Consequently, if the player is about to face a disadvantageous game result and retrieves the magnetic card 16, then this magnetic card 16 cannot be used again.

Also, if the magnetic card that was inserted at the beginning of a game is retrieved and another magnetic card is inserted, then, even if it is a proper magnetic card, game data cannot be stored in it, since no retrieval prevention flag is recorded on it. Consequently, it is possible to prevent the unauthorized copying of game data.

It should be noted that in the case of a power outage while the game is played, the retrieval prevention flag stays recorded on the magnetic card 16 placed in the card reader/writer 14 at that time, and the game cannot be executed again using that magnetic card 16. Consequently, in order to cancel the retrieval prevention flag of such a magnetic card 16, it is conceivable to provide a flag cancellation means to be used by a game device administrator.

The flag cancellation means is realized as a flag cancellation application that is installed inside the game device such that it can be run only by the game device administrator. In this case, by running the flag cancellation application and executing a flag cancellation process after inserting the magnetic card 16 into the card reader/writer 14, the retrieval prevention flag recorded on a predetermined region of the magnetic card 16 can be cancelled.

It is also possible to compose the flag cancellation means as an independent device that is supplied only to the game device administrator.

### Second Embodiment

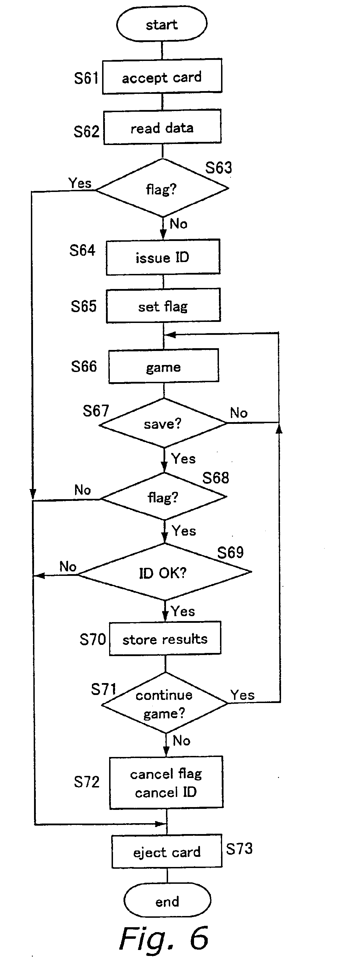

By assigning the magnetic card 16 an ID in addition to the retrieval prevention flag described for the first embodiment and recording this ID on the magnetic card 16, it is possible to prevent unauthorized copying of the game data even better. The operation of such a game device is described as the second embodiment, with reference to the flowchart in Fig. 6.

At Step S61, a card insertion acceptance process is carried out. Here, as in the first embodiment, the card insertion acceptance process shown in Fig. 2 is carried out.

At Step S62, a process of reading data on the magnetic card 16 placed in the card reader/writer 14 is executed.

At Step S63, it is determined whether the data read from the magnetic card 16 include a retrieval prevention flag. Here, of the data read from the magnetic card 16, the data of a region in which the retrieval prevention flag is stored are verified, and it is determined whether a retrieval prevention flag has been recorded or not. If it is judged that a retrieval prevention flag has been recorded on the magnetic card 16 placed in the card reader/writer 14, then the procedure advances to Step S73, and a process of ejecting the inserted magnetic card 16 is executed. As in the first embodiment, an improper card ejection processing screen 231 as shown in Fig. 13 is displayed, and at Step S73, the magnetic card 16 placed in the card reader/writer 14 is ejected.

At Step S63, if it is judged that the retrieval prevention flag has been recorded on the magnetic card 16, then the procedure advances to Step S64.

At Step S64, an ID is assigned to the magnetic card placed in the card reader/writer 14, and recorded on a predetermined region of the magnetic card 16. The assignment of the ID may be performed for example by generating a random number with a predetermined number of digits and assigning it as the ID. The ID assigned to the magnetic card 16 is stored at a predetermined region in the RAM 112 in Fig. 1.

At Step S65, the retrieval prevention flag is recorded on a predetermined region of the recording card 16 placed in the card reader/writer 14.

At Step S66, a game selected by the player or a game automatically selected by the game device is executed.

At Step S67, it is determined whether the time has come to save the game data. As in the first embodiment, it is judged whether, within a game constituted by a plurality of stages or a plurality of matches, a game cycle at which the game data can be saved has been terminated, and if it is judged that it is time to save the game data, then the procedure advances to Step S68, and if not, then it advances to Step S66.

At Step S68, it is determined whether the retrieval prevention flag has been recorded at a predetermined region of the magnetic card 16 placed in the card reader/writer 14. If no retrieval prevention flag has been recorded at a predetermined region of the magnetic card 16, then the procedure advances to Step S73. In this case, as in the first embodiment, a write error screen 241 as shown in Fig. 14 is displayed, and at Step S73 the magnetic card 16 placed in the card reader/writer 14 is ejected.

If it is judged at Step S68 that the retrieval prevention flag has been recorded at the predetermined region of the magnetic card 16, then the procedure advances to Step S69.

At Step S69, the ID is read from the magnetic card 16 placed in the card reader/writer 14, and compared with the ID stored in a predetermined region of the RAM 112. If it is judged that the ID recorded on the magnetic card 16 does not match the ID stored in the RAM 112, then the procedure advances to Step S73. In this case, a write error screen 241 as shown in Fig. 14 is displayed, and at Step S73, a process of ejecting the magnetic card 16 placed in the card reader/writer 14 is executed.

If it is judged at Step S69 that the ID recorded on the magnetic card 16 does match the ID stored in the RAM 112, then the procedure advances to Step S70.

At Step S70, the game data based on the results of the game executed at Step S67 are stored on the magnetic card 16. Here, the game data recording screen 211 as shown in Fig. 11 is displayed, and the game data storage region on the magnetic card 16 is overwritten with new game data, while input by the player is prohibited.

At Step S71, it is determined whether to continue the game or not. If there is an instruction by the player to continue the game or if the procedure automatically advances to the next game, then the procedure advances to Step S66. And if the player has given an instruction to terminate the game, if a predetermined number of defeats have been reached, or if a game end condition has been reached, such as when the player has lost all his lives, then the procedure advances to Step S72.

At Step S72, the retrieval prevention flag and the ID recorded on the magnetic card 16 are cancelled. Here, the process of canceling the retrieval prevention flag and the ID is executed by resetting the data in the predetermined region of the magnetic card 16. After that, a card ejection processing screen 221 as shown in Fig. 12 is displayed, and the procedure advances to Step S73.

At Step S73, the magnetic card 16 is ejected from the card reader/writer 14.

With this second embodiment, as in the first embodiment, if a magnetic card 16 on which the retrieval prevention flag is still recorded is placed in the card reader/writer 14, use of the stored game data can be denied by ejecting this magnetic card 16, so that if the player is about to face a disadvantageous game result and retrieves the magnetic card 16, then this magnetic card 16 cannot be used again.

Furthermore, if the magnetic card that was inserted originally is retrieved during the game and a magnetic card on which no retrieval prevention flag is recorded is inserted, then that magnetic card is ejected and it is not possible to save the game data. Moreover, also if instead of the magnetic card that was inserted originally a magnetic card is inserted on which a retrieval prevention flag has been recorded in some way, then storage of the game data on this magnetic card can be prevented, because the ID is verified when saving the game data

### Third Embodiment

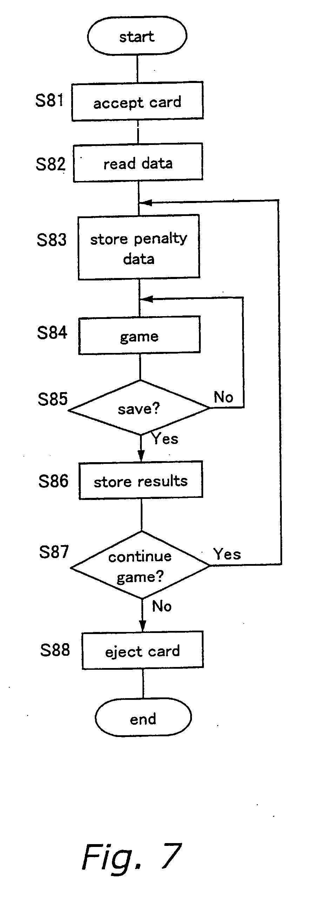

The following is a description of a third embodiment of the present invention, with reference to the flowchart in Fig. 7.

At Step S81, a card insertion acceptance process is carried out. Here, as in the first and second embodiment, the card insertion acceptance process shown in Fig. 2 is carried out.

At Step S82, a process of reading data on the magnetic card 16 placed in the card reader/writer 14 is executed.

At Step S83, game data based on the lowest result that is conceivable when playing the game with the game data stored on the magnetic card 16, or even a lower result than that, are stored as penalty data on the magnetic card 16. For example, if the game is such that one competes in a match resulting in victory or defeat, then the game data stored on the magnetic card 16 are overwritten with penalty data corresponding to game data for losing that match.

At Step S84, a game selected by the player or a game automatically selected by the game device is executed.

At Step S85, it is determined whether the time has come to save the game data. As in the first and the second embodiment, it is judged whether, within a game constituted by a plurality of stages or a plurality of matches, a game cycle at which the game data can be saved has been terminated, and if it is judged that it is time to save the game data, then the procedure advances to Step S86, and if not, then it advances to Step S84.

At Step S86, the game data based on the results of the game executed at Step S84 are recorded on the magnetic card 16. Here, a game data recording screen 211 as shown in Fig. 11 is displayed, and the game data storage region on the magnetic card 16 is overwritten with new game data, while input by the player is prohibited.

At Step S87, it is determined whether to continue the game or not. If there is an instruction by the player to continue the game or if the procedure automatically advances to the next game, then the procedure advances to Step S83. And if the player has given an instruction to terminate the game, if a predetermined number of defeats have been reached, or if a game end condition has been reached, such as when the player has lost all his lives, then the procedure advances to Step S88.

At Step S88, the magnetic card 16 is ejected from the card reader/writer 14.

With the third embodiment configured in this manner, the magnetic card 16 is overwritten with penalty data that is disadvantageous for the player at the beginning of the game, so that if the magnetic card 16 is retrieved during the game, the original game data cannot be restored. Thus, it can be prevented that the card is improperly retrieved, it can be prevented that the game results are not reflected, and also duplication of the game data can be prevented.

It should be noted that as a countermeasure allowing restitution in the case of power outages during the game, before writing the penalty data onto the magnetic card 16 at Step S83, it is conceivable to temporarily store the game data in the magnetic card 16 in a RAM 112 or other memory means. In this case, it is possible to restore the game data in the magnetic card using the game data that has been temporarily stored in the storage means. It is possible to implement the task of restoring the game data as an application installed within the game device, such that it can be performed only by the game device administrator. Moreover, it is also possible to temporarily write the game data into a region of the magnetic card 16 that cannot be accessed by ordinary users before writing penalty data onto the magnetic card, such that the restitution task can be performed by the game device administrator in the case of a power outage or the like. This restitution task can be realized with an application installed within the game device such that it can be performed only by the game device administrator, or it can be executed by a separate device supplied only to the game device administrator.

### Fourth Embodiment

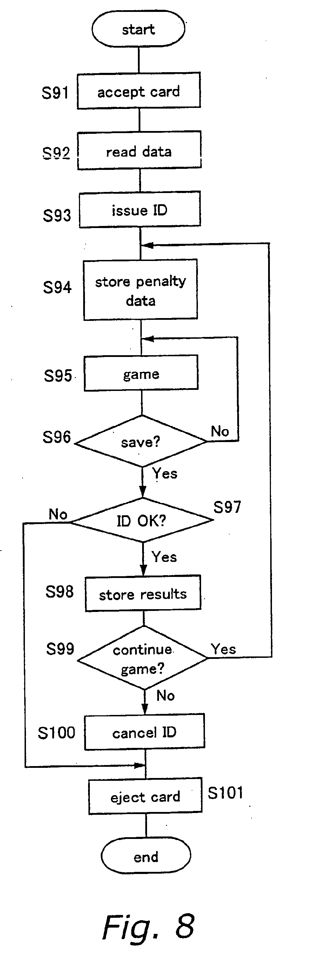

In addition to storing on the magnetic card penalty data that is disadvantageous for the player, as in the third embodiment, it is possible to prevent improper retrieval by recording an ID on the magnetic card. Such a game device is described as the fourth embodiment, based on the flowchart in Fig. 8.

At Step S91, a card insertion acceptance process is carried out. Here, as in the first embodiment, the card insertion acceptance process shown in Fig. 2 is carried out.

At Step S92, a process of reading data on the magnetic card 16 placed in the card reader/writer 14 is executed.

At Step S93, an ID is assigned to the magnetic card 16 placed in the card reader/writer 14, and recorded on a predetermined region of the magnetic card 16. The assignment of the ID may be performed for example by generating a random number with a predetermined number of digits and assigning it as the ID. The ID assigned to the magnetic card 16 is stored at a predetermined region in the RAM 112 in Fig. 1.

At Step S94, game data based on the lowest result that is conceivable when playing the game with the game data stored on the magnetic card 16, or even a lower result than that, are stored as penalty data on the magnetic card 16. For example, if the game is such that one competes in a match resulting in victory or defeat, then the game data stored on the magnetic card 16 are overwritten with penalty data corresponding to game data for losing that match.

At Step S95, a game selected by the player or a game automatically selected by the game device is executed.

At Step S96, it is determined whether the time has come to save the game data. As in the previous embodiments, it is judged whether, within a game constituted by a plurality of stages or a plurality of matches, a game cycle at which the game data can be saved has been terminated, and if it is judged that it is time to save the game data, then the procedure advances to Step S97, and if not, then it advances to Step S95.

At Step S97, the ID is read from the magnetic card 16 placed in the card reader/writer 14, and compared with the ID stored in a predetermined region of the RAM 112. If it is judged that the ID recorded on the magnetic card 16 does not match the ID stored in the RAM 112, then the procedure advances to Step S101. In this case, a write error screen 241 as shown in Fig. 14 is displayed, and at Step S101, a process of ejecting the magnetic card 16 placed in the card reader/writer 14 is executed.

If it is judged at Step S97 that the ID recorded on the magnetic card 16 matches the ID stored in the RAM 112, then the procedure advances to Step S98.

At Step S98, the game data based on the results of the game executed at Step S95 are stored on the magnetic card 16. Here, the game data recording screen 211 as shown in Fig. 11 is displayed, and the game data storage region on the magnetic card 16 is overwritten with new game data, while input by the player is prohibited.

At Step S99, it is determined whether to continue the game or not. If there is an instruction by the player to continue the game or if the procedure automatically advances to the next game, then the procedure advances to Step S94. And if the player has given an instruction to terminate the game, if a predetermined number of defeats have been reached, or if a game end condition has been reached, such as when the player has lost all his lives, then the procedure advances to Step S100.

At Step S100, the ID recorded on the magnetic card 16 is cancelled. Here, the process of canceling the ID is executed by resetting the data in the predetermined region of the magnetic card 16. After that, a card ejection processing screen 221 as shown in Fig. 12 is displayed, and the procedure advances to Step S101.

At Step S101, the magnetic card 16 is ej ected from the card reader/writer 14.

With the fourth embodiment, as in the third embodiment, if the magnetic card 16 is retrieved during the game, the original game data cannot be restored, and it is prevented that the game results are not reflected. Moreover, the effect of preventing duplication is further increased.

It should be noted that as a countermeasure for restitution in the case of power outages while playing the game, as in the third embodiment, it is conceivable to temporarily write the game data on the magnetic card 16 into a RAM 112 or other memory means or a region on the magnetic card 16 that cannot be accessed by ordinary users before writing penalty data onto the magnetic card at Step S94. The restitution can be performed by the game device administrator using the temporarily stored game data to restore the game data in the magnetic card 16.

### Fifth Embodiment

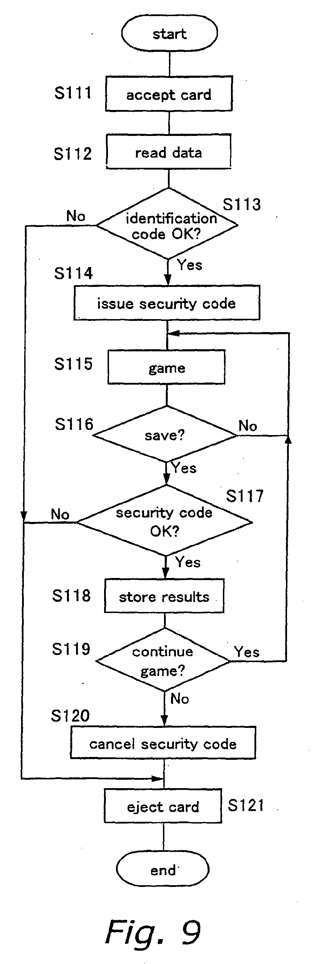

The following is a description of a fifth embodiment of the present invention, with reference to the flowchart in Fig. 9.

At Step S111, a card insertion acceptance process is carried out. Here, as in the previous embodiments, the card insertion acceptance process shown in Fig. 2 is carried out.

At Step S 112, a process of reading data on the magnetic card 16 placed in the card reader/writer 14 is executed.

At Step S113, it is determined whether the data stored at a predetermined region of the magnetic card 16 placed in the card reader/writer 14 is a predetermined identification code. For example, if the data stored in the predetermined region of the magnetic card 16 is the predetermined identification code "0000," then it is judged that a regular magnetic card 16 has been inserted and the procedure advances to Step S114. If, on the other hand, the data stored in the predetermined region of the magnetic card 16 is not the predetermined identification code "0000," then it is judged that an improper magnetic card has been inserted and the procedure advances to Step S121. If it is judged that an improper magnetic card has been inserted, then an improper card ejection processing screen 231 as shown in Fig. 13 is displayed, and at Step S121, the magnetic card 16 placed in the card reader/writer 14 is ejected.

At Step S 114, a new security code is assigned to the magnetic card 16 inserted into the card reader/writer 14, and this new security code is recorded in a predetermined region of the magnetic card 16. Here, the assigned security code is a code different from the predetermined identification code, and if the predetermined identification code is "0000", as mentioned above for example, then a random number is generated, based on which a four-digit security code other than "0000" (for example "4225") is set, with which the region in which the predetermined identification code "0000" was stored is overwritten. The security code assigned to the magnetic card 16 is stored in a predetermined region of the RAM 112.

At Step S 115, a game selected by the player or a game automatically selected by the game device is executed.

At Step S 116, it is determined whether the time has come to save the game data. As in the previous embodiments, it is judged whether, within a game constituted by a plurality of stages or a plurality of matches, a game cycle at which the game data can be saved has been terminated, and if it is judged that it is time to save the game data, then the procedure advances to Step S 177, and if not, then it advances to Step S 155.

At Step S 117, the data stored in the predetermined region of the magnetic card 16 placed in the card reader/writer 14 is read in, and the security code stored in the predetermined region of the RAM 112 is looked up. If it is judged that the data stored in the predetermined region of the magnetic card 16 does not match the security code stored in the RAM 112, then the procedure advances to Step S121. In this case, a write error screen 241 as shown in Fig. 14 is displayed, and at Step S121 the magnetic card 16 placed in the card reader/writer 14 is ejected.

If it is judged at Step S 117 that the data stored in the predetermined region of the magnetic card 16 matches the security code stored in the RAM 112, then the procedure advances to Step S118.

At Step S118, the game data based on the results of the game executed at Step S 116 are stored on the magnetic card 16. Here, the game data recording screen 211 as shown in Fig. 11 is displayed, and the game data storage region on the magnetic card 16 is overwritten with new game data, while input by the player is prohibited.

At Step S119, it is determined whether to continue the game or not. If there is an instruction by the player to continue the game or if the procedure automatically advances to the next game, then the procedure advances to Step S 115. And if the player has given an instruction to terminate the game, if a predetermined number of defeats have been reached, or if a game end condition has been reached, such as when the player has lost all his lives, then the procedure advances to Step S120.

At Step S120, the security code recorded in the magnetic card 16 is cancelled. Here, the process of canceling the security code is executed by overwriting the security code that is stored in a predetermined region of the magnetic card 16 with a predetermined identification code. If the predetermined identification code is "0000," then "0000" is recorded in the predetermined region of the magnetic card 16 after the process of canceling the security code has been executed. After that, a card ejection processing screen 221 as shown in Fig. 12 is displayed, and the procedure advances to Step S121.

At Step S121, the magnetic card 16 is ejected from the card reader/writer 14.

With this fifth embodiment, when the magnetic card 16 has been inserted, the data of a predetermined region are verified and it is determined whether they are equal to a predetermined identification code. If they are not equal to a predetermined identification code, then execution of the game with the game data stored on the magnetic card 16 can be prohibited by ejecting the inserted magnetic card 16, and unauthorized duplication of the game data as well as the keeping of game data that are different from the actual game results can be prevented.

Moreover, a new security code is given to the magnetic card 16 when the game is started, so that it is possible to detect during the game whether the magnetic card 16 has been retrieved and another card has been inserted, and unauthorized duplication of game data can be prevented.

Also in this case, if there is a power outage or the like during the game, a security code different from the predetermined code stays recorded on the magnetic disk 16 placed in the card reader/writer 14, so that the game cannot be executed again using this magnetic card 16. Consequently, it is conceivable to provide a security code cancellation means for the game device administrator, in order to cancel the security code of this magnetic card 16.

The security code cancellation means can be realized as a security code cancellation application that is installed inside the game device such that it can be run only by the game device administrator. In this case, by running the security code cancellation application and executing a security code cancellation process after inserting the magnetic card 16 into the card reader/writer 14, the security code recorded on a predetermined region of the magnetic card 16 can be restored to the predetermined identification code ("0000").

It is also possible to configure the security code cancellation means as an independent device that is supplied only to the game device administrator.

### Sixth Embodiment

It is also possible to monitor, within the game application, at predetermined time intervals whether the magnetic card 16 inserted into the card reader/writer 16 has been retrieved or not, and if it is detected that the magnetic card 16 has been retrieved, then the game may be aborted.

In this case, the game result from playing the game cannot be saved properly, and unauthorized duplication of the game data as well as the keeping of game data that are different from the actual game results can be prevented.

### Working Example

The following is a description of a working example of a specific game to which the first to sixth embodiments can be applied.

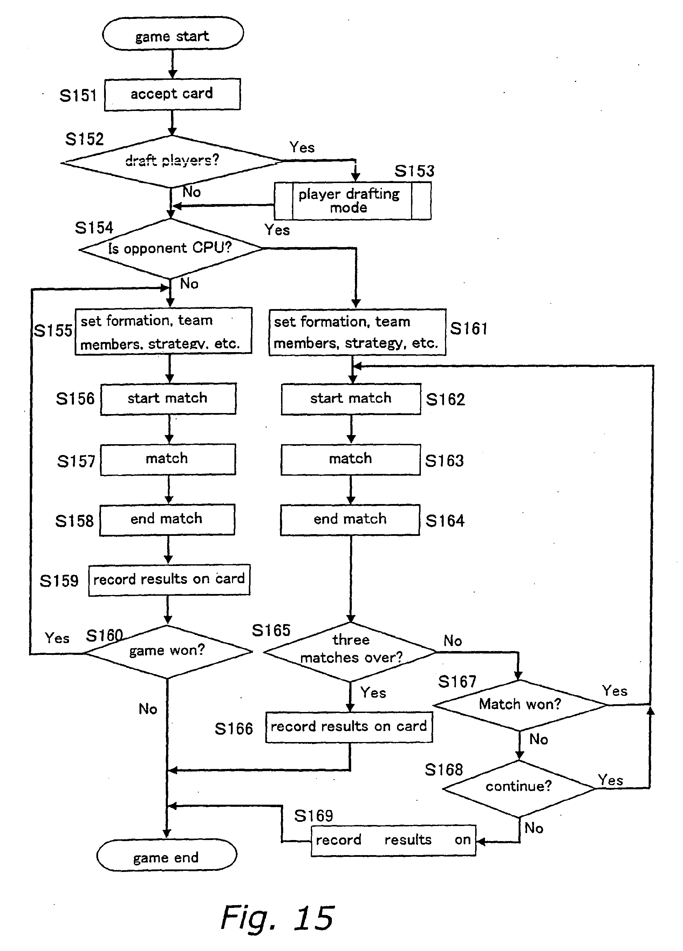

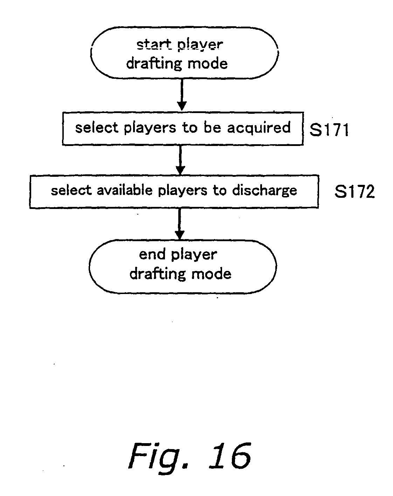

The game described here is a soccer game organized by gathering members, and this soccer team is lead through a tournament. The flow of this game is described with reference to the flowcharts in Fig. 15 and Fig. 16.

At Step S 151, a card insertion acceptance process is executed, in which the magnetic card 16 is inserted. If it is judged that use of the magnetic card 16 has not been terminated properly the previous time, then the magnetic card 16 is ejected, and execution of the game with the game data stored on this magnetic card 16 is prohibited.

At Step S152, it is judged whether player acquisition is performed or not. Here, a screen is displayed that urges the player to give an instruction whether he wants to acquire players, and if the player gives the instruction to acquire players, then the procedure advances to S153, whereas if the player gives the instruction not to acquire players, then the procedure advances to Step S 154.

At Step S153, the procedure jumps to the player drafting mode, and a player drafting procedure is executed. This player drafting procedure is executed for example in accordance with the flowchart shown in Fig. 16.

At Step S171, the data of the players that can be acquired is displayed based on point information in the game data stored on the magnetic card 16, and the player enters his selection instruction.

At Step S 172, the data for the available players to discharge for the players to be acquired that have been selected at Step S 171, and the player enters his selection instruction. After the selection instruction of players to be acquired and to discharge been entered, the player selection mode is terminated, and the procedure returns to the main routine.

At Step S 154, it is determined whether the opponent of the match is a CPU or not. Here, a game mode selection screen is displayed with the options of a match against another player or a match against a CPU, and the player enters his selection instruction. If a match against another player has been selected; then the procedure advances to Step S 155, and if a match against the CPU has been selected, then the procedure advances to Step S161.

At Step S155, the settings for formation, members, match etc. are entered. Here, a game among players is executed, so that each player enters the starting team, settable strategy and so on for the soccer match.

At Step S 156, the match is started based on the settings entered by the players, and at Step S157 the match is executed. When the match is terminated, a termination process is executed at Step S 158. If penalty data are recorded on the magnetic card 16, then game data based on game results for the case that the match is lost may be stored on the magnetic card 16 before starting the match at Step S156.

At Step S 159, game data in accordance with the match results are stored on the magnetic card 16. At this time, the retrieval prevention flag and the identification code on the magnetic card 16 are confirmed as described above, and if it is judged that there was a retrieval of the magnetic card 16, then the saving of the game data may be made impossible.

At Step S160, it is judged whether the match was won. In this game, if the mode of matches against another players was selected, then the game can be continued until a match is lost. Consequently, if the game is won, then the procedure advances to Step S 155, and the next match may be started.

At Step S161, the settings for formation, members, match etc. are entered. Here, the CPU has been selected as the opponent, so that the player enters the starting team, settable strategy and so on for the soccer match, and the starting team and formation set by the CPU is displayed.

Based on the settings entered by the player and the settings of the CPU, the match starts at Step S162, the match is executed at Step S163, and when the match terminates, a termination process is executed at Step S164. If penalty data are recorded on the magnetic data 16, then game data based on game results for the case that the match is lost may be stored on the magnetic card 16 before starting the match at Step S162.

At Step S165, it is determined whether a predetermined number of matches have been terminated. For example, if for one credit the game can be continued until the CPU has won three times, and it is determined that all three matches have terminated, then, if it is judged that the three matches have been terminated, then the procedure advances to Step S 166, and if not, then it advances to Step S167.

At Step S166, the game data based on the results of the match are stored on the magnetic card 16. Also in this case, the retrieval prevention flag and the identification code of the magnetic card 16 are verified with the method described above, and it is judged whether it is an improper card or not.

At Step S 167, it is judged whether the match was won. If it is judged that the player has won, then the procedure advances to Step S162, and the next match begins. If the player has lost the match, then the procedure advances to Step S168.

At Step S 168, it is determined whether the player continues the game. Here, a screen urging the player to enter an instruction indicating whether he wants to continue is displayed, and a corresponding instruction input is received from the player. If the player has entered the instruction to continue, then the procedure advances to Step S162, and if the player has entered the instruction not to continue, then the procedure advances to Step S 169.

At Step S169, the game results are recorded on the magnetic card. Also here, the retrieval prevention flag and the identification code of the magnetic card 16 are verified as described above, and it is judged whether there hasn't been an improper retrieval of the card.

### Other Embodiments

If a unique ID is assigned to each magnetic card, then the game device may be configured such that this ID is read and stored in the RAM 112 when placing the magnetic card in the card reader/writer 14, and the game data are saved after confirming the ID of the magnetic card 16.

By combining the retrieval prevention flag, the assigning of an ID and the recording of penalty data in an appropriate manner, improper retrieval of the magnetic card can be prevented.

As mentioned above, the recording medium for storing game data may be a memory card in which an EEPROM or a flash memory is sealed, or it may be a flexible disk or a rewritable MD, CD-RW, MO or other recording medium.

With the embodiments of the present invention, use of recording media that are retrieved during the game is made impossible, and the game data of actually executed games are reliably reflected in the game data stored on the recording media, so that duplication of the game data by improper means as well as use of game data that have been saved by improper means can be prevented.

## Claims

1. A method for saving game data in a game device that executes a game with a game execution unit and stores game data based on a result of that game onto a removable recording medium (16) that is placed in a data input/output unit (14, 141, 142);
**characterized by**
executing, when starting the game, a step of reading (S42; S62; S112) data that have been stored in a predetermined region of a recording medium (16) that has been placed in the data input/output unit (14, 141, 142), and determining if the data are improper retrieval detection data (S43; S63; S113), a step of prohibiting use of the recording medium if it is judged that the data that have been read are improper retrieval detection data, a step of overwriting the predetermined region of the recording medium with improper retrieval detection data (S44; S65; S114) and allowing use of the recording medium if it is judged that the data that have been read are not improper retrieval detection data;
executing, when saving the game data, a step of reading the data stored in the predetermined region of the recording medium placed in the data input/output unit and determining whether those data are improper retrieval detection data (S47; S68; S117), a step of prohibiting storage of the game data on the recording medium if it is judged that the data that have been read are not improper retrieval detection data, a step of storing on the recording medium the game data based on a result from execution of the game with the game execution unit if it is judged that the data that have been read are improper retrieval detection data (S48; S72; S120); and
executing, when terminating the game, a step of overwriting the predetermined region on which the improper retrieval detection data have been stored on the recording medium (S50; S72; S120).

2. The method for saving data according to claim 1 wherein said step, when starting the game, of determining if said data are improper retrieval detection data includes determining if said data are proper termination, certification data;
wherein the use of the recording medium is allowed if it is judged that the data that have been read are proper termination certification data;
wherein the step, when terminating the game, of overwriting the predetermined region on which the improper retrieval detection data have been stored on the recording medium, comprises overwriting with proper termination certification data.

3. The method for saving game data according to claim 1 wherein the predetermined region of the recording medium is set to the storage region of a retrieval prevention flag, a state in which the retrieval prevention flag in the predetermined region is set is taken to be a state in which the improper retrieval detection data are stored.

4. The method for saving game data according to claim 2,
wherein the predetermined region of the recording medium is set to a storage region of a retrieval prevention flag, a state in which the retrieval prevention flag in that predetermined region is set is taken to be a state in which the improper retrieval detection data are stored, and a state in which the retrieval prevention flag in that predetermined region is not set is taken to be a state in which the proper termination certification data are stored;
wherein said step, when starting the game, of reading the data and determining if the data are improper retrieval detection data or proper termination certification, data, comprises a step of verifying whether a retrieval prevention flag has been recorded; wherein said step of prohibiting use of the recording medium occurs if the retrieval prevention flag has been recorded on the recording medium; wherein said step of overwriting the predetermined region with improper retrieval detection data comprises, recording the retrieval prevention flag on the recording medium; wherein said step of allowing use of the recording medium occurs if the retrieval prevention flag has not been recorded on the recording medium;
wherein said step, when saving the game data, of reading the data and determining if the data are improper retrieval detection data or proper termination certification data, comprises a step of verifying whether the retrieval prevention flag has been recorded; wherein said step of prohibiting storage of the game data on the recording medium occurs if the retrieval prevention flag has not been recorded on the recording medium; wherein said step of storing on the recording medium the game data based on a result from execution of the game with the game execution unit occurs if the retrieval prevention flag has been recorded on the recording medium;
wherein said step , when terminating the game, of overwriting the predetermined region with proper termination certification data involves, a step of clearing the retrieval prevention flag recorded on the recording medium.

5. The method for saving game data according to claim 1, further comprising:
executing a step of setting an ID storage region for storing an ID on the recording medium, and storing in a memory unit the ID stored in the ID storage region of the recording medium when starting the game (S64); and
executing, when saving the game data, a step of reading the ID stored on the recording medium placed in the data input/output unit and verifying whether that ID matches the ID stored in the memory unit (S69); a step of prohibiting storage of the game data to the recording medium if the ID stored on the recording medium does not match the ID stored in the memory unit; and a step of allowing storage of the game data on the recording medium if the ID stored on the recording medium matches the ID stored in the memory unit.

6. The method for saving game data according to claim 5, further comprising, when starting the game, a step of assigning an ID to the recording medium placed in the data input/output unit and storing this ID on the recording medium (S64).

7. The method for saving game data according to claim 1, wherein the improper retrieval detection data are a security code that is assigned to the recording medium when starting the game.

8. The method for saving game data according to claim 2,
wherein the proper termination certification data are a predetermined identification code, and the improper retrieval detection data are a security code that is assigned to the recording medium when starting the game;
wherein said step of prohibiting use of the recording medium occurs if the data that have been read in are not the predetermined identification code (S113); comprising of a step of assigning the security code to the recording medium, wherein said step of overwriting the predetermined region with improper retrieval detection data comprises overwriting with that security code (S114) and wherein said step of allowing use of the recording medium occurs if the data that have been read are the predetermined identification code;
wherein said step of prohibiting storage of the game data on the recording medium occurs if the data that have been read from the recording medium are different from the security code that has been assigned when starting the game (S117); wherein said step of storing on the recording medium the game data based on a result from execution of the game with the game execution unit (S118) occurs if the data that have been read from the recording medium match the security code that has been assigned when starting the game;
wherein said step, when terminating the game, of overwriting the predetermined region on the recording medium involves overwriting with the predetermined identification code (S120).

9. A game device, comprising:
a game execution unit for executing a game;
a data input/output unit with which data can be read/written from/onto a removable recording medium that is placed in the data input/output unit;
a medium usage restriction unit that, when starting the game, reads data in a predetermined region of the recording medium placed in the data input/output unit, prohibits usage of the recording medium if the data that have been read are improper retrieval detection data and allows use of the recording medium if the data are not improper retrieval detection data;
a unit that records improper retrieval detection data onto a recording medium whose usage has been allowed by the medium usage restriction unit;
a data saving restriction unit that, when saving game data, reads data in a predetermined region of the recording medium placed in the data input/output unit, prohibits storage of game data on the recording medium, if the data that have been read are not improper retrieval detection data and allows storage, on the recording medium, of game data based on a result from execution of the game with the game execution unit, if the data that have been read are improper retrieval detection data; and
a unit that, when terminating the game, overwrites the predetermined region on which the improper retrieval detection data have been stored on the recording medium.

10. The game device according to claim 9;
wherein said medium usage restriction unit is arranged so that, when starting the game, it allows use of the recording medium if the data read are proper termination certification data; wherein the overwriting unit, which when terminating the game overwrites the predetermined region of the recording medium, is arranged so that proper termination certification data overwrites the improper retrieval prevention data.

11. The game device according to claim 9 wherein the predetermined region of the recording medium is set to a storage region of a retrieval prevention flag, a state is which the retrieval prevention flag in that predetermined region is set is taken to be a state in which the improper retrieval detection data are stored;
wherein said medium usage restriction unit is arranged so that, when starting the game, it verifies whether a retrieval prevention flag has been recorded onto the recording medium placed in the data input/output unit, allows usage of the recording medium if the retrieval prevention flag has not been recorded, and prohibits usage of the recording medium if the retrieval prevention flag has been recorded;
wherein said unit that records improper retrieval detection data comprises a flag setting unit that records a retrieval prevention flag onto a recording medium whose usage has been allowed by the medium usage restriction unit;
wherein said data saving restriction unit is arranged that, when saving game data, it verifies whether the retrieval prevention flag has been recorded on the recording medium placed in the data input/output unit, prohibits storage of game data on the recording medium if the retrieval prevention flag has not been recorded on the recording medium, and allows storage, on the recording medium, of game data based on a result from execution of the game with the game execution unit if the retrieval prevention flag has been recorded on the recording medium;
wherein said unit that records improper retrieval detection data comprises a flag cancellation unit that, when terminating the game, clears the retrieval prevention flag recorded on the recording medium

12. The game device according to claim 9,
wherein an ID storage region for storing an ID is set in the recording medium;
the game device further comprising:
a memory unit that can store the ID stored in the ID storage region of the recording medium; and
an ID storage unit for storing the ID stored on the recording medium in the memory unit when starting the game;
wherein the data saving restriction unit further comprises a function of, when saving the game data, reading the ID stored on the recording medium placed in the data input/output unit and verifying whether this ID matches the ID stored in the memory unit, prohibiting storage of the game data onto the recording medium if the ID stored on the recording medium does not match the ID stored in the memory unit, and allowing storage of the game data onto the recording medium if the ID stored on the recording medium matches the ID stored in the memory unit.

13. The game device according to claim 12, further comprising ID assignment unit for assigning an ID to the recording medium placed in the data input/output unit when starting the game, and storing this ID on the recording medium.

14. The game device according to claim 9;
wherein the improper retrieval detection data are a security code that is assigned to the recording medium when starting the game.

15. The game device according to claim 9 wherein the improper retrieval detection data are a security code that is assigned to the recording medium when starting the game, and the proper termination certification data are a predetermined identification code;
wherein said medium usage restriction unit is arranged so that, when starting the game, it reads data in the predetermined region of the recording medium placed in the data input/output unit, prohibits usage of the recording medium if the data that have been read are not a predetermined identification code, and, if the data that have been read from the recording medium are a predetermined identification code, assigns to the recording medium a security code different from the predetermined identification code, overwrites the predetermined region of the recording medium with that security code, and allows usage of the recording medium;
wherein said data saving restriction unit is arranged so that, when saving game data, reads data in the predetermined region of the recording medium placed in the data input/output unit, prohibits storage of game data on the recording medium if the data read from the recording medium are different from the security code assigned when starting the game, and stores, on the recording medium, game data based on a result from execution of the game with the game execution unit if the data read from the recording medium match the security code assigned when starting the game; and
wherein the overwriting unit comprises a security code cancellation unit that, when terminating the game, overwrites the predetermined region of the recording medium with a predetermined identification code.

16. The method for saving dame data according to claim 1 comprising:
when starting the game, a step of overwriting the game data stored on the recording medium with game data based on a result that is at least as low as the lowest result that is conceivable when executing the game with the game execution (S83; S94) unit; and
a step of executing the game with the game execution unit and overwriting the game data stored on the recording medium with game data based on a result of that game (S86; S98)

17. The game device according to claim 9 comprising of:
a retrieval prevention data storage unit that, when starting the game, overwrites game data stored on the recording medium with game data based on a result that is at least as low as the lowest result that is conceivable when executing the game with the game execution unit; and
a proper data storage unit for executing the game with the game execution unit and overwriting the game data stored on the recording medium with game data based on a result of that game.

## Patentansprüche

1. Verfahren zur Sicherung von Spieldaten in einer Spielvorrichtung, welche ein Spiel mittels einer Spielausführungseinheit ausführt und Spieldaten, basierend auf einem Ergebnis des Spieles, auf einem abnehmbaren Aufzeichnungsmedium (16) speichert, welches in einer Daten-Eingabe/Ausgabe-Einheit (14, 141, 142) positioniert ist,
**gekennzeichnet durch**
beim Start des Spiels Ausführung eines Schrittes zum Datenlesen (S41; S62; S112), welche in einer vorbestimmten Zone eines Aufzeichnungsmediums (16), welches in der Daten-Eingabe/Ausgabe-Einheit (14, 141, 142) positioniert worden ist, gespeichert worden sind und Bestimmung, ob die Daten ungeeignete Wiedererkennungsdaten (S43; S63; S113) sind, einen Schritt zur Verhinderung der Benutzung des Aufzeichnungsmediums, falls entschieden ist, dass die Daten, welche ausgelesen worden sind, ungeeignete Wiedererkennungsdaten sind, einen Schritt zur Überschreibung der vorbestimmten Zone des Aufzeichnungsmediums mit ungeeigneten Wiedererkennungsdaten (S44; S65; S114) und Zulassung der Verwendung des Aufzeichnungsmediums, falls entschieden ist, dass die Daten, welche ausgelesen worden sind, nicht ungeeignete Wiedererkennungsdaten sind,
bei der Speicherung der Spieldaten Ausführung eines Schrittes des Auslesens der Daten, welche in der vorbestimmten Zone des Aufzeichnungsmediums, welches in der Daten-Eingabe/Ausgabe-Einheit positioniert ist, gespeichert sind und Bestimmung, ob derartige Daten ungeeignete Wiedererkennungsdaten (S47; S68; S117) sind, einen Schritt zur Verhinderung der Speicherung der Spieldaten auf dem Aufzeichnungsmedium, falls entschieden ist, dass die Daten, welche ausgelesen worden sind, nicht ungeeignete Wiedererkennungsdaten sind, einen Schritt zur Speicherung der Spieldaten auf dem Aufzeichnungsmedium, basierend auf einem Ergebnis der Ausführung des Spieles mit der Spielausführungseinheit, falls entschieden ist, dass die Daten, welche ausgelesen worden sind, ungeeignete Wiedererkennungsdaten (S48; S72; S120) sind, und
bei Beendigung des Spieles Ausführung eines Schrittes der Überschreibung der vorbestimmten Zone, in welcher die ungeeigneten Wiedererkennungsdaten auf dem Aufzeichnungsmedium (S50; S72; S120) aufgezeichnet worden sind.

2. Verfahren zur Sicherung von Spieldaten nach Anspruch 1,
worin beim Start des Spieles der Schritt zur Bestimmung, ob die Daten ungeeignete Wiedererkennungsdaten sind, die Bestimmung beinhaltet, ob die Daten geeignete Abschlusskennzeichnungsdaten sind,
worin die Verwendung des Aufzeichnungsmediums zugelassen ist, falls entschieden ist, dass die Daten, die ausgelesen worden sind, geeignete Abschlusskennzeichnungsdaten sind,
worin der Schritt bei Beendigung des Spieles zur Überschreibung der vorbestimmten Zone in der die ungeeigneten Wiedererkennungsdaten auf dem Aufzeichnungsmedium gespeichert worden sind, die Überschreibung mit geeigneten Abschlusskennzeichnungsdaten umfasst.

3. Verfahren zur Sicherung von Spieldaten nach Anspruch 1,
worin die vorbestimmte Zone des Aufzeichnungsmediums als die Speicherzone für eine Wiedererkennungsverhinderungsmarke gesetzt wird, wobei ein Zustand, in welchem die Wiedergewinnungsverhinderungsmarke, die in der vorbestimmten Zone gesetzt ist, als ein Zustand ausgelegt wird, in welchem die ungeeigneten Wiedererkennungsdaten gespeichert sind.

4. Verfahren zur Sicherung von Spieldaten nach Anspruch 2,
worin die vorbestimmte Zone des Aufzeichnungsmediums als eine Speicherzone einer Wiedergewinnungsverhinderungsmarke gesetzt wird, wobei ein Zustand, in welchem die Wiedergewinnungsverhinderungsmarke in der vorbestimmten Zone gesetzt ist als ein Zustand ausgelegt wird, in dem die ungeeigneten Wiedererkennungsdaten gespeichert sind und ein Zustand, in welchem die Wiedergewinnungsverhinderungsmarke in der vorbestimmten Zone nicht gesetzt ist, ausgelegt wird als ein Zustand, in welchem die geeigneten Abschlusskennzeichnungsdaten gespeichert sind, worin beim Starten des Spieles der Schritt des Auslesens der Daten und der Bestimmung, ob die Daten ungeeignete Wiedererkennungsdaten sind oder geeignete Abschlusskennzeichnungsdaten, einen Schritt zur Überprüfung umfasst, ob eine Wiedergewinnungsverhinderungsmarke aufgezeichnet worden ist, worin der Schritt zur Verhinderung der Verwendung des Aufzeichnungsmediums einsetzt, falls die Wiedergewinnungsverhinderungsmarke auf dem Aufzeichnungsmedium aufgezeichnet worden ist, worin der Schritt des Überschreibens der vorbestimmten Zone mit ungeeigneten Wiedererkennungsdaten die Aufzeichnung der Wiedergewinnungsverhinderungsmarke auf dem Aufzeichnungsmedium umfasst, worin der Schritt zur möglichen Verwendung des Aufzeichnungsmediums einsetzt, falls die Wiedergewinnungsverhinderungsmarke nicht auf dem Aufzeichnungsmedium aufgezeichnet worden ist,
worin, falls die Spieldaten gesichert werden, der Schritt zur Auslesung der Daten und Bestimmung, ob die Daten ungeeignete Wiedererkennungsdaten sind oder geeignete Abschlusskennzeichnungsdaten einen Schritt der Überprüfung umfasst, ob die Wiedergewinnungsverhinderungsmarke aufgezeichnet worden ist, worin der Schritt zum Verbot der Speicherung von Spieldaten auf dem Aufzeichnungsmedium einsetzt, falls die Wiedergewinnungsverhinderungsmarke nicht auf dem Aufzeichnungsmedium aufgezeichnet worden ist, worin der Schritt zu Speicherung von den Spieldaten auf dem Aufzeichnungsmedium, basierend auf einem Ergebnis der Ausführung des Spiels mit der Spielausführungseinheit einsetzt, falls die Wiedergewinnungsverhinderungsmarke auf dem Aufzeichnungsmedium aufgezeichnet worden ist,
worin, bei Beendigung des Spiels, der Schritt des Überschreibens der vorbestimmten Zone mit geeigneten Abschlusskennzeichnungsdaten einen Schritt zur Bereinigung der Wiedergewinnungsverhinderungsmarke umfasst, die auf dem Aufzeichnungsmedium aufgezeichnet worden ist.

5. Verfahren zur Speicherung von Spieldaten nach Anspruch 1, welches weiterhin aufweist:
Ausführung eines Schrittes zum Setzen einer ID-Speicherzone zur Speicherung einer ID auf dem Aufzeichnungsmedium und Speicherung der ID in einer Speichereinheit, welche in der ID-Speicherzone auf dem Aufzeichnungsmedium aufgezeichnet wurde, wenn das Spiel (S64) gestartet wird, und
Ausführung, wenn die Spieldaten gesichert werden, eines Schrittes zur Auslesung der ID, welche auf dem Aufzeichnungsmedium in der Dateneingabe/Ausgabeeinheit positioniert wurde und Überprüfung, ob der ID mit dem ID zusammen passt, der in der Speichereinheit (S69) gespeichert ist, ein Schritt zur Unterbindung der Speicherung der Spieldaten auf dem Aufzeichnungsmedium, falls die ID, welcher auf dem Speichermedium gespeichert ist, nicht mit der ID zusammen passt, welche in der Speichereinheit gespeichert ist, und ein Schritt zur Ermöglichung der Speicherung von Spieldaten auf dem Aufzeichnungsmedium, wenn die ID, gespeichert auf dem Aufzeichnungsmedium, mit der ID zusammen passt, die auf der Speichereinheit gespeichert ist.

6. Verfahren zur Sicherung von Spieldaten nach Anspruch 5 weiterhin beim Start des Spiels aufweist einen Schritt zur Zuweisung einer ID zu dem Aufzeichnungsmedium, welches in der Daten-Eingabe/Ausgabe-Einheit positioniert ist, und Speicherung dieser ID auf dem Aufzeichnungsmedium (S64).

7. Verfahren zur Sicherung von Spieldaten nach Anspruch 1,
worin die ungeeigneten Wiedererkennungsdaten eine Sicherheitscodierung darstellen, welche dem Aufzeichnungsmedium beim Start des Spieles zugewiesen wird.

8. Verfahren zur Sicherung von Spieldaten nach Anspruch 2, worin die geeigneten Abschlusskennzeichnungsdaten eine vorbestimmte Identifizierungscodierung darstellen und die ungeeigneten Wiedererkennungsdaten eine Sicherheitscodierung darstellen, welche dem Aufzeichnungsmedium beim Start des Spieles zugewiesen wird,
worin der Schritt zur Unterbindung der Verwendung des Aufzeichnungsmediums auftritt, wenn die Daten, die eingelesen worden sind, nicht die vorbestimmte Identifizierungscodierung (Sl13) darstellen, aufweisend einen Schritt zur Zuweisung der Sicherheitscodierung zu dem Aufzeichnungsmedium, worin der Schritt zum Überschreiben der vorbestimmten Zone mit ungeeigneten Wiedererkennungsdaten die Überschreibung mit der Sicherheitscodierung (S114) umfasst und worin dieser Schritt für die Zulassung der Verwendung des Aufzeichnungsmediums abläuft, falls die Daten, die ausgelesen worden sind, die vorbestimmte Identifizierungscodierung darstellen,
worin der Schritt zur Vermeidung der Speicherung der Spieldaten auf dem Aufzeichnungsmedium abläuft, falls die Daten, die von dem Aufzeichnungsmedium ausgelesen worden sind, sich von der Sicherheitscodierung unterscheiden, welche beim Start des Spieles (S117) zugewiesen worden ist, worin der Schritt zur Speicherung der Spieldaten basieren auf einem Ergebnis der Ausführung des Spieles mit der Spielausführungseinheit (S118) auf dem Aufzeichnungsmedium abläuft, falls die Daten, die von dem Aufzeichnungsmedium ausgelesen worden sind mit der Sicherheitscodierung zusammen passen, welche beim Start des Spieles zugewiesen worden ist,
worin bei der Beendigung des Spieles der Schritt der Überschreibung der vorbestimmten Zone auf dem Aufzeichnungsmedium die Überschreibung mit der vorbestimmten Identifizierungscodierung (S120) umfasst.

9. Spielvorrichtung, aufweisend:
eine Spielausführungseinheit zur Ausführung eines Spieles,
eine Dateneingabe/-ausgabeeinheit, mit welcher Daten ausgelesen/eingelesen werden können von/auf ein abnehmbares Aufzeichnungsmittel, welches in der Dateneingabe/-ausgabeeinheit positioniert ist,
eine Mediumeinsatzbegrenzungseinheit, die beim Start des Spieles Daten in einer vorbestimmten Zone des Aufzeichnungsmediums ausliest, welches in der Daten-Eingabe/Ausgabe-Einheit positioniert ist, den Einsatz des Aufzeichnungsmediums verhindert, falls die Daten, welche aufgezeichnet worden sind ungeeignete Wiedererkennungsdaten sind und Zulassung der Verwendung des Aufzeichnungsmediums, falls die Daten nicht ungeeignete Wiedererkennungsdaten sind,
eine Einheit, welche ungeeignete Wiedererkennungsdaten auf einem Aufzeichnungsmedium aufzeichnet, dessen Einsatz zugelassen worden ist durch die Mediumeinsatzbegrenzungseinheit,
eine Datensicherungsbegrenzungseinheit, die bei der Sicherung der Spieldaten, Daten in einer vorbestimmten Zone des Aufzeichnungsmediums, positioniert in der Dateneingabe/-ausgabeeinheit, ausliest, Verhinderung einer Speicherung von Spieldaten auf dem Aufzeichnungsmedium, falls die Daten, die ausgelesen worden sind, nicht ungeeignete Wiedererkennungsdaten sind und Zulassung der Speicherung auf dem Aufzeichnungsmedium, falls die Daten, basierend auf einem Ergebnis der Ausführung des Spieles mit der Spielausführungseinheit, falls die Daten, die ausgelesen worden sind, ungeeignete Wiedererkennungsdaten sind, und
eine Einheit, welche beim Abschluss des Spieles die vorbestimmte Zone, auf welcher die ungeeigneten Wiedererkennungsdaten aufgezeichnet worden sind, auf dem Aufzeichnungsmedium überschreibt.

10. Spielvorrichtung nach Anspruch 9,
worin die Mediumeinsatzbegrenzungseinheit derart angeordnet ist, dass sie beim Start des Spieles die Verwendung des Aufzeichnungsmediums zulässt, falls die ausgelesenen Daten geeignete Abschlusskennzeichnungsdaten sind, worin die Überschreibungseinheit, welche beim Abschluss des Spieles die vorbestimmte Zone des Aufzeichnungsmediums überschreibt, so angeordnet ist, dass geeignete Abschlusskennzeichnungsdaten die ungeeigneten Wiedererkennungsdaten überschreiben.

11. Spielvorrichtung nach Anspruch 9, worin die vorbestimmte Zone des Aufzeichnungsmediums zu einer Speicherzone einer Wiedergewinnungsverhinderungsmarke gesetzt wird, sodass dieser Status derart zu verstehen ist, dass die Wiedergewinnungsverhinderungsmarke, die in der vorbestimmten Zone gesetzt ist, als der Status gilt, in welchem die ungeeigneten Wiedererkennungsdaten gespeichert sind,
worin die Mediumeinsatzbegrenzungseinheit derart ausgelegt ist, dass beim Start des Spieles von ihr überprüft wird, ob eine Wiedergewinnungsverhinderungsmarke auf dem Aufzeichnungsmedium, welches in der Daten-Eingabe/Ausgabe-Einheit positioniert ist, aufgezeichnet worden ist, diese den Einsatz des Aufzeichnungsmediums zulässt, falls die Wiedergewinnungsverhinderungsmarke nicht aufgezeichnet worden ist und den Einsatz des Aufzeichnungsmediums verhindert, falls die Wiedergewinnungsverhinderungsmarke aufgezeichnet worden ist,
worin die Einheit, welche ungeeignete Wiedererkennungsdaten aufzeichnet, eine Markensetzeinheit umfasst, welche eine Wiedergewinnungsverhinderungsmarke auf einem Aufzeichnungsmedium aufzeichnet, dessen Einsatz durch die Mediumeinsatzbegrenzungseinheit zugelassen worden ist,
worin die Datensicherungsbegrenzungseinheit derart ausgelegt ist, dass, falls Spieldaten gesichert werden, diese überprüft, ob die Wiedergewinnungsverhinderungsmarke auf dem Aufzeichnungsmedium, welches in der Dateneingabe/-ausgabeeinheit positioniert ist, aufgezeichnet worden sind, eine Speicherung von Spieldaten auf dem Aufzeichnungsmedium verhindert, falls die Wiedergewinnungsverhinderungsmarke nicht auf dem Aufzeichnungsmedium aufgezeichnet worden ist und eine Speicherung auf dem Aufzeichnungsmedium von Spieldaten, basierend auf einem Ergebnis der Ausführung des Spieles mit der Spielausführungseinheit zulässt, falls die Wiedergewinnungsverhinderungsmarke auf dem Aufzeichnungsmedium aufgezeichnet worden ist,
worin die Einheit, welche ungeeignete Wiedererkennungsdaten aufzeichnet, eine Abbruchmarkeneinheit umfasst, welche bei Beendigung des Spieles die Wiedergewinnungsverhinderungsmarke, welche auf dem Aufzeichnungsmedium aufgezeichnet ist, beseitigt.

12. Spielvorrichtung nach Anspruch 9,
worin eine ID-Speicherzone zur Speicherung einer ID gesetzt wird in dem Aufzeichnungsmedium,
die Spielvorrichtung weiterhin umfasst:
eine Speichereinheit, welche die ID speichern kann, welche in der ID-Speicherzone des Aufzeichnungsmediums gespeichert ist, und
eine ID-Speichereinheit zur Speicherung der ID, gespeichert auf dem Aufzeichnungsmedium in der Speichereinheit beim Start des Spieles,
worin die Datensicherungsbegrenzungseinheit weiterhin eine Funktion bei der Speicherung der Spieldaten umfasst zum Auslesen der ID, welche auf dem Aufzeichnungsmedium gespeichert ist, welche in der Dateneingabe/-ausgabeeinheit positioniert ist und Überprüfung, ob diese ID mit der ID zusammen passt, welche in der Speichereinheit gespeichert ist, welche die Speicherung von Spieldaten auf dem Aufzeichnungsmedium verhindert, wenn die ID, gespeichert auf dem Aufzeichnungsmedium, nicht mit der ID, gespeichert auf der Speichereinheit zusammenpasst und welche die Speicherung von Spieldaten auf dem Aufzeichnungsmedium zulässt, wenn die ID, gespeichert auf dem Aufzeichnungsmedium, mit der ID zusammenpasst, die in der Speichereinheit gespeichert ist.

13. Spielvorrichtung nach Anspruch 12, die weiterhin eine ID-Zuweisungseinheit zur Zuweisung einer ID zu dem Aufzeichnungsmedium umfasst, welches in der Daten-Eingabe/Ausgabe-Einheit platziert ist, wenn das Spiel startet und zur Speicherung dieser ID auf dem Aufzeichnungsmedium.

14. Spielvorrichtung nach Anspruch 9, worin die ungeeigneten Wiedererkennungsdaten eine Sicherheitscodierung darstellen, welche dem Aufzeichnungsmedium beim Start des Spieles zugeordnet ist.

15. Spielvorrichtung nach Anspruch 9, worin die ungeeigneten Wiedererkennungsdaten eine Sicherheitscodierung darstellen, die dem Aufzeichnungsmedium beim Start des Spieles zugewiesen ist und die geeigneten Abschlusskennzeichnungsdaten eine vorbestimmte Identifizierungscodierung darstellen,
worin die Mediumeinsatzbeschränkungseinheit derart ausgelegt ist, um beim Start des Spieles Daten in der vorbestimmten Zone des Aufzeichnungsmediums auslesen, welche in der Daten-Eingabe/Ausgabe-Einheit platziert ist, welche den Einsatz des Aufzeichnungsmediums verhindert, falls die Daten, die ausgelesen worden sind, keine vorbestimmte Identifizierungscodierung darstellen und falls die Daten, die von dem Aufzeichnungsmedium ausgelesen worden sind, eine vorbestimmte Identifizierungscodierung darstellen, weist dem Aufzeichnungsmedium eine Sicherheitscodierung zu, die sich von der vorbestimmten Identifizierungscodierung unterscheidet, überschreibt die vorbestimmte Zone des Aufzeichnungsmediums mit der Sicherheitscodierung und ermöglicht die Benutzung des Aufzeichnungsmediums,
worin die Datensicherungsbegrenzungseinheit derart ausgelegt ist, dass diese bei der Speicherung der Spieldaten Daten in der vorbestimmten Zone des Aufzeichnungsmediums, welches in der von dem Aufzeichnungsmedium platziert ist, ausliest, die Speicherung von Spieldaten auf dem Aufzeichnungsmedium verhindert, falls die von dem Aufzeichnungsmedium ausgelesenen Daten sich von der zugewiesenen Sicherheitscodierung unterscheiden, wenn das Spiel startet, und speichert auf dem Aufzeichnungsmedium Spieldaten, basierend auf einem Ergebnis einer Ausführung des Spieles mit der Spielausführungseinheit, falls die von dem Aufzeichnungsmedium ausgelesenen Daten mit der zugewiesenen Sicherheitscodierung zusammenpassen, wenn das Spiel startet, und
worin die Überschreibungseinheit eine Sicherheitscodierungsabbrucheinheit umfasst, die, wenn das Spiel endet, die vorbestimmte Zone des Aufzeichnungsmediums mit einer vorbestimmten Identifizierungscodierung überschreibt.

16. Verfahren zur Sicherung von Spieldaten nach Anspruch 1, umfassend:
beim Start des Spieles Ausführung eines Schrittes der Überschreibung von Spieldaten, welche auf dem Aufzeichnungsmedium gespeichert sind mit Spieldaten, basierend auf einem Ergebnis, welches zumindest so niedrig ist wie das niedrigste Ergebnis das vorstellbar ist, wenn das Spiel ausgeführt wird, mit der Spielausführungseinheit (S83, S94), und
einen Schritt der Ausführung des Spieles mit der Spielausführungseinheit und Überschreibung der Spieldaten, welche auf dem Aufzeichnungsmedium gespeichert sind mit Spieldaten, basierend auf einem Ergebnis des Spieles (S86; S98).

17. Spielvorrichtung nach Anspruch 9, umfassend:
eine Datenwiedergewinnungsverhinderungsspeichereinheit, die beim Start des Spieles Spieldaten, welche auf dem Aufzeichnungsmedium aufgezeichnet sind mit Spieldaten überschreibt, die auf einem Ergebnis basieren, das zumindest so gering ist wie das geringste Ergebnis, das vorstellbar ist bei der Ausführung des Spieles mit der Spielausführungseinheit, und
eine geeignete Datenspeichereinheit zur Ausführung des Spiels mit der Spielausführungseinheit und Überschreibung der Spieldaten, welche auf dem Aufzeichnungsmedium gespeichert sind mit Spieldaten, basierend auf einem Ergebnis des Spieles.

## Revendications

1. Procédé de sauvegarde de données de eu dans un dispositif de jeu qui exécute un jeu au moyen d'un module d'exécution de jeu et mémorise des données de jeu en fonction du résultat de ce jeu sur un milieu d'enregistrement effaçable (16) qui est placé dans un module d'entrée/sortie de données (14, 141, 142) ; **caractérisé par** les étapes suivantes :
exécuter, quand on démarre le jeu, une étape de lecture (S42, S62, S112) de données qui ont été mémorisées dans une région prédéterminée d'un milieu d'enregistrement (16) placé dans le module d'entrée/sortie de données (14, 141, 142), et déterminer si les données sont des données de détection de récupération incorrecte (S43, S63, S113), une étape d'interdiction d'utilisation du milieu d'enregistrement si on estime que les données qui ont été lues sont des données de détection de récupération incorrecte, une étape de surécriture de la région prédéterminée du milieu d'enregistrement par des données de détection de récupération incorrecte (S44, S65, S114) et d'autorisation d'utilisation du milieu d'enregistrement si on estime que les données qui ont été lues ne sont pas des données de détection de récupération incorrecte ;
exécuter, quand on sauvegarde les données de jeu, une étape de lecture des données situées dans la région prédéterminée du milieu d'enregistrement placé dans le module d'entrée/sortie de données et déterminer si ces données sont des données de détection de récupération incorrecte (S47, S68, S117), une étape d'interdiction de mémorisation des données de jeu sur le milieu d'enregistrement si on estime que les données qui ont été lues ne sont pas des données de détection de récupération incorrecte, une étape de mémorisation sur le milieu d'enregistrement des données de jeu en fonction du résultat de l'exécution du jeu par le module d'exécution de jeu si on estime que les données qui ont été lues sont des données de détection de récupération incorrecte (S48, S72, S120) ; et
exécuter, quand on achève le jeu, une étape de surécriture de la région prédéterminée sur laquelle les données de détection de récupération incorrecte ont été mémorisées sur le milieu d'enregistrement (S50, S72, S120).

2. Procédé de sauvegarde de données selon la revendication 1, dans lequel l'étape, quand on démarre le jeu, de détermination de ce que les données sont ou non des données de détection de récupération incorrecte inclut la détermination de ce que les données sont des données de certification de terminaison convenable ;
dans lequel l'utilisation du milieu d'enregistrement est autorisée si on estime que les données qui ont été lues sont des données de certification de terminaison convenable ;
dans lequel l'étape, quand on achève le jeu, de surécriture de la région prédéterminée sur laquelle les données de détection de récupération incorrecte ont été mémorisées sur le milieu d'enregistrement comprend la surécriture par des données de certification de terminaison convenable.

3. Procédé de sauvegarde de données de jeu selon la revendication 1, dans lequel la région prédéterminée du milieu d'enregistrement est fixée comme la région de mémorisation d'un drapeau d'empêchement de récupération, un état dans lequel le drapeau d'empêchement de récupération dans la région prédéterminée est fixé et pris pour être un état dans lequel les données de détection de récupération incorrecte sont mémorisées.

4. Procédé de sauvegarde de données de jeu selon la revendication 2, dans lequel :
la région prédéterminée du milieu d'enregistrement est fixée pour être une région de mémorisation du drapeau d'empêchement de récupération, un état dans lequel le drapeau d'empêchement de récupération dans cette région prédéterminée est choisi et fixé pour être un état dans lequel les données de détection de récupération incorrecte sont mémorisées et un état dans lequel le drapeau d'empêchement de récupération dans cette région prédéterminée n'est pas établi est pris comme étant un état dans lequel les données de certification de terminaison convenable sont mémorisées ;
l'étape, au démarrage du jeu, de lecture des données et de détermination de ce que les données sont des données de détection de récupération incorrecte ou des données de certification de terminaison convenable comprend une étape de vérification de ce qu'un drapeau d'empêchement de récupération a été enregistré ; dans lequel l'étape d'interdiction d'utilisation du milieu d'enregistrement survient si le drapeau d'empêchement de récupération a été enregistré sur le milieu d'enregistrement ; dans lequel l'étape de surécriture de la région prédéterminée par les données de détection de récupération incorrecte comprend l'enregistrement du drapeau d'empêchement de récupération sur le milieu d'enregistrement ; dans lequel l'étape d'autorisation de l'utilisation du milieu d'enregistrement survient si le drapeau d'empêchement de récupération n'a pas été enregistré sur le milieu d'enregistrement ;
l'étape, lors de la sauvegarde des données de jeu, de lecture des données et de détermination de ce que ces données sont des données de détection de récupération incorrecte ou des données de certification de terminaison convenable comprend une étape de vérification de ce que le drapeau d'empêchement de récupération a été enregistré ; dans lequel l'étape d'interdiction de mémorisation de données de jeu sur le milieu d'enregistrement survient si le drapeau d'empêchement de récupération n'a pas été enregistré sur le milieu d'enregistrement ; dans lequel l'étape de mémorisation sur le milieu d'enregistrement de données de jeu en fonction d'un résultat de l'exécution du jeu par le module d'exécution de jeu survient si le drapeau d'empêchement de récupération a été enregistré sur le milieu d'enregistrement ; et
l'étape, à la fin du jeu, de surécriture de la région prédéterminée par des données de certification de terminaison convenable implique une étape d'effacement du drapeau d'empêchement de récupération enregistré sur le milieu d'enregistrement.

5. Procédé de sauvegarde de données de jeu selon la revendication 1, comprenant en outre :
exécuter une étape d'établissement d'une région de mémorisation d'ID pour mémoriser un ID sur le milieu d'enregistrement, et de mémorisation dans un module mémoire de l'ID mémorisé dans la région de mémorisation d'ID sur le milieu d'enregistrement quand on commence le jeu (S64) ; et
exécuter quand on sauvegarde les données de jeu, une étape de lecture de l'ID mémorisé sur le milieu d'enregistrement placé dans le module d'entrée/sortie de données et de vérification de ce que cet ID concorde avec l'ID mémorisé dans le module mémoire (S69) ; une étape d'interdiction de mémorisation des données de jeu sur le milieu d'enregistrement si l'ID mémorisé sur le milieu d'enregistrement ne concorde pas avec l'ID mémorisé dans le module mémoire ; et une étape d'autorisation de mémorisation des données de jeu sur le milieu d'enregistrement si l'ID mémorisé sur le milieu d'enregistrement concorde avec l'ID mémorisé dans le module mémoire.

6. Procédé de sauvegarde de données de jeu selon la revendication 5, comprenant en outre, au démarrage du jeu, une étape d'affectation d'un ID au milieu d'enregistrement placé sur le module d'entrée/sortie de données et de mémorisation de cet ID sur le milieu d'enregistrement (S64).

7. Procédé de sauvegarde de données de jeu selon la revendication 1, dans lequel les données de détection de récupération incorrecte sont un code de sécurité qui est affecté au milieu d'enregistrement quand on commence le jeu.

8. Procédé de sauvegarde de données de jeu selon la revendication 2, dans lequel :
les données de certification de terminaison convenable sont un code d'identification prédéterminé et les données de détection de récupération incorrecte sont un code qui est affecté au milieu d'enregistrement au démarrage du jeu ;
l'étape d'interdiction d'utilisation du milieu d'enregistrement survient si les données qui ont été lues ne sont pas le code d'identification prédéterminé (S113) ; comprenant une étape d'affectation du code de sécurité au milieu d'enregistrement, l'étape de surécriture de la région prédéterminée par des données de détection de récupération incorrecte comprenant la surécriture par ce code de sécurité (S114), et l'étape d'autorisation d'utilisation du milieu d'enregistrement survenant si les données qui ont été lues sont le code d'identification prédéterminé ;
l'étape d'interdiction de mémorisation des données de jeu sur le milieu d'enregistrement survient si les données qui ont été lues à partir du milieu d'enregistrement sont différentes du code de sécurité qui a été affecté au démarrage du jeu (S117) ; dans lequel l'étape de mémorisation sur le milieu d'enregistrement de données de jeu en fonction d'un résultat d'exécution du jeu par le module d'exécution de jeu (S118) survient si les données qui ont été lues à partir du milieu d'enregistrement concordent avec le code de sécurité qui a été affecté au démarrage du jeu ; et
l'étape, à la fin du jeu, de surécriture de la région prédéterminée sur le milieu d'enregistrement implique une surécriture par le code d'identification prédéterminé (S120).

9. Dispositif de jeu comprenant :
un module d'exécution de jeu pour exécuter un jeu ;
un module d'entrée/sortie de données par lequel des données peuvent être lues/écrites sur un milieu d'enregistrement effaçable qui est placé dans le module d'entrée/sortie de données ;
un module de restriction d'usage de milieu qui, au démarrage du jeu, lit des données dans une région prédéterminée du milieu d'enregistrement placé dans le module d'entrée/sortie de données, interdit l'usage du milieu d'enregistrement si les données qui ont été lues sont des données de détection de récupération incorrecte et permet l'utilisation du milieu d'enregistrement si les données ne sont pas des données de détection de récupération incorrecte ;
un module qui enregistre des données de détection de récupération incorrecte sur un milieu d'enregistrement dont une utilisation a été autorisée par le module de restriction d'utilisation de jeu ;
un module de restriction de sauvegarde de données qui, quand on sauvegarde des données de jeu, lit des données dans une région prédéterminée du milieu d'enregistrement placé dans le module d'entrée/sortie de données, interdit la mémorisation des données de jeu sur le milieu d'enregistrement si les données qui ont été lues ne sont pas des données de détection de récupération incorrecte et permet la mémorisation, sur le milieu d'enregistrement, de données de jeu sur la base du résultat de l'exécution du jeu par le module d'exécution de jeu, si les données qui ont été lues sont des données de détection de récupération incorrecte ; et
un module qui, à la fin du jeu, surécrit la région prédéterminée sur laquelle les données de détection de récupération incorrecte ont été mémorisées sur le milieu d'enregistrement.

10. Dispositif de jeu selon la revendication 9, dans lequel le module de restriction d'utilisation de milieu est agencé de sorte que, au démarrage du jeu, il permet l'utilisation du milieu d'enregistrement si les données lues sont des données de certification de terminaison convenable ; dans lequel le module de surécriture, qui, à la fin du jeu surécrit la région prédéterminée du milieu d'enregistrement, est agencé de sorte que les données de certification de terminaison convenable se surécrivent sur les données d'empêchement de récupération incorrecte.

11. Dispositif de jeu selon la revendication 9, dans lequel :
la région prédéterminée du milieu d'enregistrement est choisie comme étant une région de mémorisation d'un drapeau d'empêchement de récupération, un état dans lequel le drapeau d'empêchement de récupération dans cette région prédéterminée est fixé et pris pour être un état dans lequel les données de détection de récupération incorrecte sont mémorisées ;
le module de restriction d'utilisation de milieu est agencé de sorte que, au démarrage du jeu, il vérifie si un drapeau d'empêchement de récupération a été enregistré sur le milieu d'enregistrement placé dans le module d'entrée/sortie de données, autorise l'utilisation du milieu d'enregistrement si le drapeau d'empêchement de récupération n'a pas été enregistré, et interdit l'utilisation du milieu d'enregistrement si le drapeau d'empêchement de récupération a été enregistré ;
le module qui enregistre les données de détection de récupération incorrecte comprend un module de fixation de drapeau qui enregistre un drapeau d'empêchement de récupération sur un milieu d'enregistrement dont l'utilisation a été autorisée par le module de restriction d'utilisation de milieu ;
le module de restriction de sauvegarde de données est agencé de sorte que, lors de la sauvegarde de données de jeu, il vérifie si le drapeau d'empêchement de récupération a été enregistré sur le milieu d'enregistrement placé dans le module d'entrée/sortie de données, interdit la mémorisation des données de jeu sur le milieu d'enregistrement si le drapeau d'empêchement de récupération n'a pas été enregistré sur le milieu d'enregistrement, et autorise la mémorisation sur le milieu d'enregistrement de données de jeu en fonction du résultat de l'exécution du jeu par le module d'exécution de jeu si le drapeau d'empêchement de récupération a été enregistré sur le milieu d'enregistrement ; et
le module qui détecte des données de détection de récupération incorrecte comprend un module de suppression de drapeau qui, à la fin du jeu, efface le drapeau d'empêchement de récupération enregistré sur le milieu d'enregistrement.

12. Dispositif de jeu selon la revendication 9, dans lequel une région de mémorisation d'ID pour mémoriser un ID est établie dans le milieu d'enregistrement ; le dispositif de jeu comprenant en outre :
un module mémoire qui peut mémoriser l'ID mémorisé dans la région de mémorisation d'ID sur le milieu d'enregistrement ; et
un module de mémorisation d'ID pour mémoriser l'ID mémorisé sur le milieu d'enregistrement dans le module mémoire au démarrage du jeu ;
dans lequel le module de restriction de sauvegarde de données comprend une fonction, quand on sauvegarde les données, de lecture de l'ID mémorisé sur le milieu d'enregistrement placé dans le module d'entrée/sortie de données et de vérification dans ce que cet ID concorde avec l'ID mémorisé dans le module mémoire, interdisant la mémorisation des données de jeu sur le milieu d'enregistrement si l'ID mémorisé sur le milieu d'enregistrement ne concorde pas avec l'ID mémorisé dans le module mémoire, et autorisant la mémorisation des données de jeu sur le milieu d'enregistrement si l'ID mémorisé sur le milieu d'enregistrement concorde avec l'ID mémorisé dans le module mémoire.

13. Dispositif de jeu selon la revendication 12, comprenant en outre un module d'affectation d'ID pour affecter un ID au milieu d'enregistrement placé dans le module d'entrée/sortie de données au démarrage du jeu, et de mémorisation de cet ID sur le milieu d'enregistrement.

14. Dispositif de jeu selon la revendication 9, dans lequel les données de détection de récupération incorrecte sont un code de sécurité qui est affecté au milieu d'enregistrement au démarrage du jeu.

15. Dispositif de jeu selon la revendication 9, dans lequel :
les données de détection de récupération incorrecte sont un code de sécurité qui est affecté au milieu d'enregistrement au démarrage du jeu et les données de certification de terminaison convenable sont un code d'identification prédéterminé ;
un module de restriction d'utilisation de milieu est disposé de sorte que, au démarrage du jeu, il lit des données dans la région prédéterminée du milieu d'enregistrement placé dans le module d'entrée/sortie de données, interdit l'utilisation du milieu d'enregistrement si les données qui ont été lues ne sont pas un code d'identification prédéterminé et, si les données qui ont été lues à partir du milieu d'enregistrement sont un code d'identification prédéterminé, affecte au milieu d'enregistrement un code de sécurité différent du code d'identification prédéterminé, surécrit la région prédéterminée du milieu d'enregistrement par ce code de sécurité, et autorise l'utilisation du milieu d'enregistrement ;
le module de restriction de sauvegarde de données est agencé de sorte que, quand on sauvegarde les données de jeu, il lit des données dans la région prédéterminée du milieu d'enregistrement placé dans le module d'entrée/sortie de données, interdit l'utilisation des données de jeu sur le milieu d'enregistrement de sorte que les données lues à partir du milieu d'enregistrement sont différentes du code de sécurité affecté au démarrage du jeu, et mémorise sur le milieu d'enregistrement, des données de jeu en fonction d'un résultat de l'exécution du jeu par le module d'exécution de jeu, si les données lues à partir du milieu d'enregistrement concordent avec le code de sécurité affecté au démarrage du jeu ; et
le module de surécriture comprend un module de suppression de code de sécurité qui, à la fin du jeu, surécrit la région prédéterminée du milieu d'enregistrement par un code d'identification prédéterminé.

16. Procédé de sauvegarde de données de jeu selon la revendication 1, comprenant :
au démarrage du jeu une étape de surécriture des données de jeu mémorisées sur le milieu d'enregistrement par des données de jeu en fonction d'un résultat qui est au moins aussi faible que le plus petit résultat qui est concevable quand on exécute le jeu par le module d'exécution de jeu (S83, S94) ; et
une étape d'exécution du jeu par le module d'exécution de jeu et de surécriture des données de jeu mémorisées sur le milieu d'enregistrement par des données de jeu en fonction d'un résultat de ce jeu (S86, S98) .

17. Dispositif de jeu selon la revendication 9, comprenant :
un module de mémorisation de données d'empêchement de récupération qui, au démarrage du jeu, surécrit des données de jeu mémorisées sur le milieu d'enregistrement par des données de jeu en fonction d'un résultat qui est au moins aussi petit que le plus petit résultat qui est concevable quand on exécute le jeu par le module d'exécution de jeu ; et
un module de mémorisation de données correctes pour exécuter le jeu par le module d'exécution de jeu et de surécriture des données de jeu écrites sur le milieu d'enregistrement par les données de jeu en fonction d'un résultat de ce jeu.
